# FASCICULE DE BREVET EUROPEEN

(11) **EP 3 175 535 B1**
(45) Date de publication et mention de la délivrance du brevet: **07.04.2021**
(21) Numéro de dépôt: 15751059.5
(22) Date de dépôt: 31.07.2015
(51) Int. Cl.: H02K 1/22, H02K 19/18, H02K 19/22, H02K 21/14, H02K 21/22, H02K 1/14, H02K 3/28, H02K 19/10, H02K 1/24

(54) **MACHINE ELECTRIQUE HOMOPOLAIRE A FLUX TRANSVERSAL**
HOMOPOLARE ELEKTRISCHE MASCHINE MIT TRANSVERSALEM FLUSS
HOMOPOLAR ELECTRIC MACHINE WITH TRANSVERSAL FLUX

(30) Priorité: 31.07.2014 FR 1457439
(43) Date de publication de la demande: 07.06.2017
(73) Titulaire: Francecol Technology, 37540 Saint-Cyr-sur-Loire (FR)
(72) Inventeur: BERNOT, François, 37230 Luynes (FR); MEDARIAN, Romain, 37100 Tours Nord (FR); MORALES MORALES, Jonh, 37000 Tours (FR); MBIKOU MOUTSINGA, Rodret, 37100 Tours (FR); BERNAOLA MENDOZA, Victor, 37000 Tours (FR)
(74) Mandataire: Casalonga
(86) Numéro de dépôt international: PCT/FR2015/052130
(87) Numéro de publication internationale: WO 2016/016591

(56) Documents cités:
- WO-A1-02/091547
- WO-A1-2007/000054
- WO-A1-2007/043161
- WO-A2-03/030333
- DE-A1- 19 956 367
- FR-A1- 2 809 240
- FR-A1- 2 828 027
- FR-A1- 2 969 409
- GB-A- 917 263
- US-A- 3 663 846
- US-A- 5 677 580
- US-A1- 2011 089 774

## Description

La présente invention se réfère à des machines électriques tournantes à structure homopolaire, également dénommées machines électriques à flux transverse, composée ou autre, comportant de manière très générale un stator et un rotor, en particulier susceptibles d'être logés dans une carcasse. L'un au moins du stator et du rotor est constitué d'au moins une bobine électrique portée par une culasse magnétique, comportant au moins deux pôles décalés angulairement d'une valeur d'angle sensiblement égale.

### ART ANTÉRIEUR

Les machines à stator homopolaire simple alimentées en courant alternatif sont connues de l'état de la technique. La structure et le fonctionnement d'une telle machine électrique, également dénommée machine électrique à flux transverse, sont largement décrits dans la littérature. Elles sont toutes basées sur des structures où les bobines électriques sont de forme annulaire. Ladite disposition annulaire est intéressante d'un point de vue fabrication, mais pénalise les performances, car elle génère un flux de fuites très important, et donc limite les performances à vitesse élevée, de par le caractère inductif de la machine.

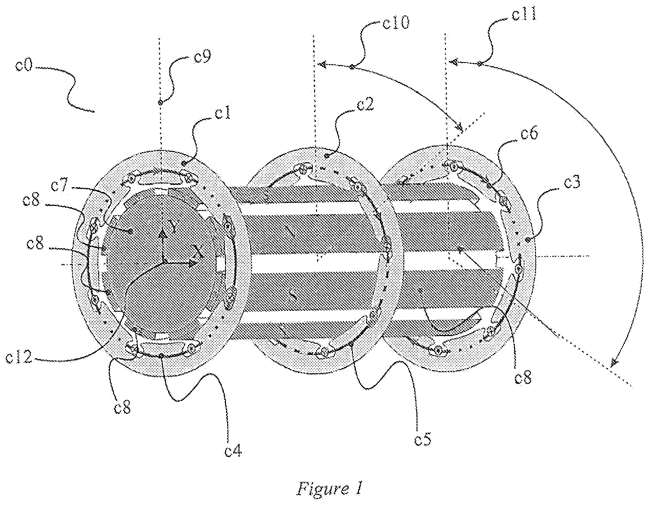

La Figure 1 présente l'état de l'art antérieur pour ladite structure homopolaire simple, dans une version octopolaire, à stator à griffes triphasé et rotor à aimants superficiels. Une autre réalisation peut comporter un rotor à aimants enterrés. Une autre réalisation peut comporter un stator polyphasé, le nombre de phases structurelles étant quelconque (supérieur ou égal à l'unité). Une autre réalisation peut comporter un rotor externe inversé.

La réalisation de la Figure 1 comporte trois stators identiques (c1), (c2) et (c3), formant une machine homopolaire simple triphasée (c0). Lesdits stators (c1), (c2) et (c3), seront notés dans ce document phases structurelles lorsqu'ils sont complets avec leur bobine (c4), (c5) ou (c6). Ces phases structurelles sont déphasées les unes par rapport aux autres d'un angle de 30° mécanique environ pour une version triphasée. Dans le cas de la réalisation présentée à la Figure 1, l'angle (c10), angle de déphasage entre la phase (c1) et la phase (c2), vaut sensiblement 30° et l'angle (c11), angle de déphasage entre la phase structurelle (c1) et la phase structurelle (c3), vaut sensiblement 60°. L'angle (c10) correspond sensiblement au tiers de l'angle électrique de la machine tournante, ledit angle électrique étant égal à 360° (un tour) divisé par le nombre de paires de pôles (quatre dans ce cas octopolaire). L'angle (c11) vaut sensiblement le double de l'angle (c10).

Ces décalages angulaires peuvent être différents, en fonction des applications, mais ces variations relèvent de l'état de l'art antérieur connu, appliqué à d'autres structures de machines tournantes notamment. Elles ne servent qu'à optimiser la machine tournante finale. Une version diphasée de ladite machine tournante ne comporterait que deux stators (c1) et (c2), qui seraient alors décalés d'un angle (c10) égal à 45° dans la réalisation octopolaire décrite à la Figure 1. Les règles de calcul des décalages angulaires entre phases structurelles, ou stators respectifs font partie de l'état de l'art antérieur. Dans une version polyphasée, de manière générale, le nombre de phases électriques d'alimentation est au moins égal au nombre de phases structurelles (stators) (c1), (c2), (c3).

Dans la réalisation de la Figure 1, les stators (c1), (c2) et (c3) peuvent avoir une structure à griffes ou ondulée (réalisée avec de la tôle vrillée), qui est caractérisée par une ondulation apparente des bobines statoriques, notées respectivement (c4), (c5) et (c6) autour des plans de rotation X/Y (c12) de chaque stator. Ladite ondulation peut être obtenue par vrillage des dents statoriques, comme le propose la demande de brevet français n°2809240, ou encore par encerclement des bobines (c4), (c5) et (c6) comme le propose la demande de brevet français n°2828027.

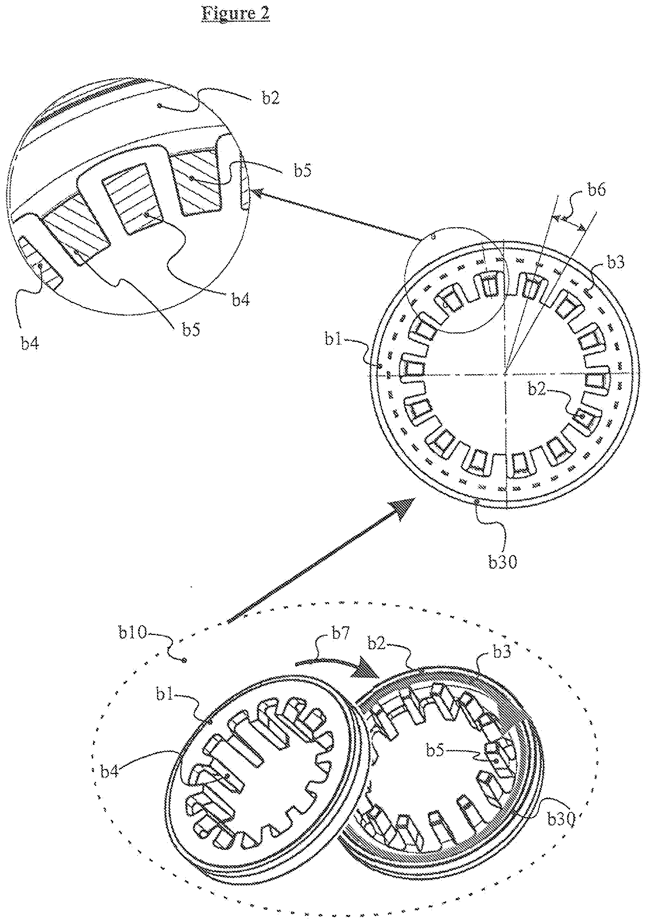

Dans cette dernière réalisation astucieuse, présentée à la Figure 2 pour un nombre de pôles égal à 28, les stators (c1), (c2) et (c3) sont tous réalisés de la même façon (b10), à partir de deux griffes identiques (b1) et (b2), enserrant une bobine (b3). Lesdites griffes sont assemblées l'une sur l'autre, conformément à la demande de brevet n°2828027, de façon à ce que leurs dents respectives (b4) et (b5) des deux griffes (b1) et (b2) soient sensiblement équidistantes. La griffe (b1) est posée sur la griffe (b2), comme l'indique la flèche (b7). Les zones de contact (b30) entre les griffes (b1) et (b2) doivent être correctement réalisées, afin d'éviter les entrefers magnétiques indésirables dans la zone de contact. La forme de cette zone de contact (b30) peut ne pas être constituée d'un plan coplanaire selon X/Y (c12), mais adopter toute autre forme comme une ondulation ou encore un crénelage, qui autoriserait le calage angulaire relatif desdites griffes (b1) et (b2). La griffe (b2) est décalée angulairement par rapport à la griffe (b1). Ledit angle de calage (b6) vaut dans le cas du stator de la figure 2 sensiblement la moitié de l'angle électrique de la machine, c'est-à-dire pour cette polarité de 14 paires de pôles présentée à la figure 2, la valeur de 12,857°.

Il est important de noter que les réalisations des Figures 1 et 2 considèrent que chaque dent (b4) et (b5) forme un pôle électrique complet de la machine. Nous sommes par conséquent en présence dans la figure 1 d'un assemblage de machines électriques tournantes monophasées, réunies axialement autour d'un même rotor (c7). Ledit rotor peut être de plusieurs natures, notamment synchrone, asynchrone ou à réluctance variable. Les différentes réalisations connues à ce jour des rotors font partie de l'état de l'art antérieur et s'adaptent toutes à la présence d'un ensemble de stators à griffes, tel que décrit à la Figure 1.

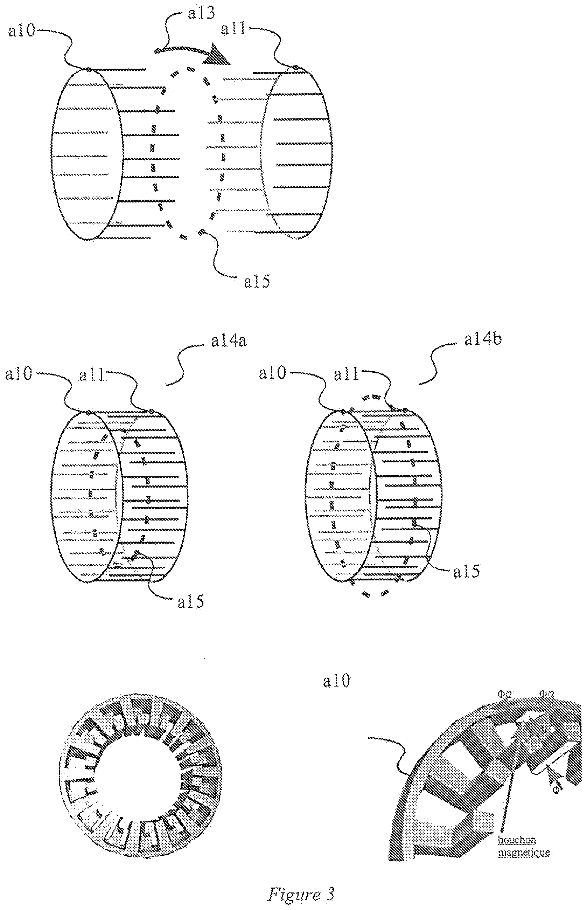

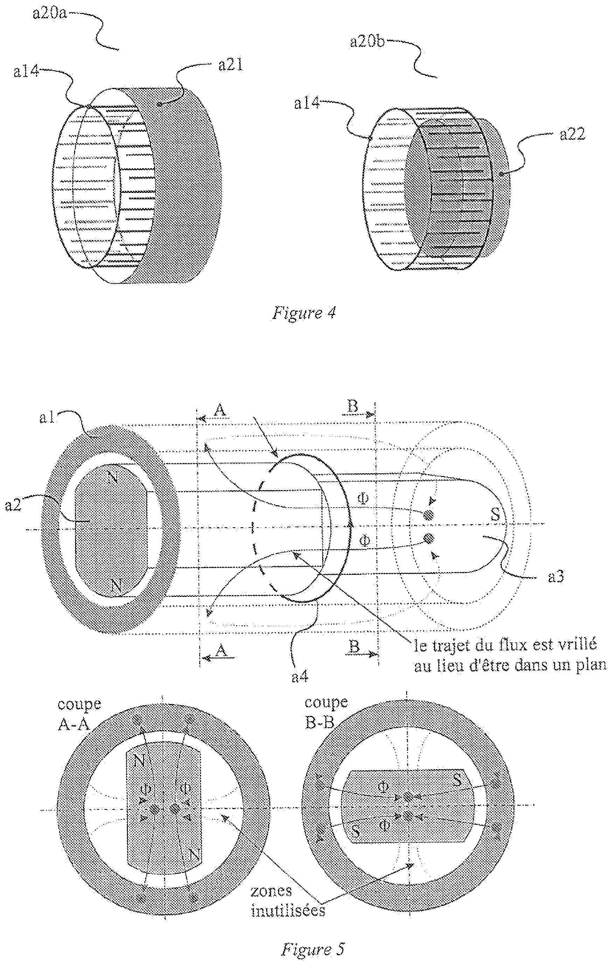

Nous nommerons dans la suite de ce document les stators (c1), (c2) et (c3) sous le nom de phase structurelle, afin d'en clarifier le rôle. Dans toute la description qui suit, nous considérerons donc comme formant une phase structurelle complète l'ensemble formé par deux griffes (b1) et (b2), enserrant une bobine (b3) . La Figure 3 reprend de façon plus synthétique cette proposition, en présentant ces deux griffes (a10) pour (b1), et (a11) pour (b2), qui sont réunies l'une contre l'autre selon la direction (a13), pour former une seule phase (a14), présentée en figure 4, telle que celle (b10) décrite ci-dessus en référence à la figure 2 et correspondant à la réunion de deux griffes (b1) et (b2), enserrant une bobine (b3) . Il faut noter à ce stade de la description de l'état de l'art, l'intérêt de prévoir un moyen de maintien axial des griffes (b1) et (b2) l'une sur l'autre, qui peut consister par exemple en une rondelle élastique de serrage, montée en un endroit quelconque de l'axe de rotation du plan XY (c12). L'état de l'art décrit largement les formes des dents,afin d'améliorer le flux d'entrefer et de réduire les flux de fuites.

Toutes ces descriptions des Figures 1 et 2 font partie de l'état de l'art antérieur. Elles incluent la version à stator inversé, où les dents (b4) et (b5) des griffes (b1) et (b2) sont situées sur la périphérie extérieure, avec un rotor qui est situé extérieurement au stator.

La Figure 3 présente la façon dont deux griffes (a10) et (a11) forment de façon générique une phase structurelle (a14a) ou (a14b), laquelle phase structurelle peut former indifféremment un induit ou un inducteur de machine électrique tournante, selon que la bobine (a15) est englobée de façon interne par les griffes (a10) et (a11). Le cas représenté par la réalisation (a14a) correspond à une machine dite à structure inverse, à rotor externe, où la bobine (a15) est placée à l'intérieur du rotor. Le cas représenté par la réalisation (a14b) correspond à une machine dite à structure directe, à rotor interne, où la bobine (a15) est placée à l'extérieur du rotor.

L'état de l'art antérieur fait apparaître clairement l'interchangeabilité des différents éléments d'une machine tournante électrique, notamment leur position relative interne ou externe, comme le présente la Figure 4. La phase structurelle (a14), constituée de deux griffes (a10) et (a11), peut être située à l'extérieur d'une pièce (a22), pour former alors une machine tournante monophasée directe (a20b). La phase structurelle (a14), constituée de deux griffes (a10) et (a11) peut être située à l'intérieur d'une pièce (a21), pour former alors une machine tournante monophasée inverse (a20a). La juxtaposition axiale de ces machines complètes (a20a) ou (a20b), décalées angulairement d'un angle adéquat, tel que connu de l'état de l'art explicité ci-dessus, permet de former une machine tournante polyphasée.

Dans la présentation de la figure 4, les pièces (a14), (a22) et (a21) peuvent être indifféremment statiques ou tournantes. Si une pièce (a14) tournante comporte une bobine solidaire, il faut alors l'alimenter par des bagues ou tout autre système connu de l'homme de l'art (diodes tournantes par exemple).

La combinaison (a14) statique et (a22) à aimants tournants (ou inducteur bobiné), correspond à une machine dite synchrone directe (a20b). La phase structurelle (a14) est alors alimentée en courant alternatif et selon les procédés de contrôle dits brushless connus de l'homme de l'art.

La combinaison (a14) statique et (a21) à aimants tournants (ou inducteur bobiné), correspond à une machine (a20a) formant une machine dite synchrone inversée. La phase structurelle (a14) est alors alimentée en courant alternatif et selon les procédés de contrôle dits brushless connus de l'homme de l'art.

La combinaison (a21) statique et (a14) tournant, correspond à une machine (a20a) formant un alternateur à griffes, dit de Lundell, largement utilisé dans les moteurs thermiques.

Toutes les autres combinaisons sont possibles, comme (a14) tournant et (a22) statique, ou encore (a14) tournant et (a21) statique, ou encore les deux parties (a14) et (a22) tournantes, ou encore les deux parties (a14) et (a21) tournantes. Ces différentes combinaisons sont largement décrites dans l'état de l'art, pour les machines tournantes à structure coplanaire.

La figure 5 présente un état de l'art antérieur des machines à rotor homopolaire alimentées en courant continu. La figure 5 présente la structure classique d'une machine à rotor homopolaire (également dénommée machine électrique à flux transverse) où un stator polyphasé tétrapolaire coplanaire (a1) est placé autour d'un rotor séparé en deux demi-rotors (a2) et (a3), décalés angulairement l'un par rapport à l'autre de 90° mécaniques. La bobine d'excitation rotorique (a4) est située dans le plan médian de réunion des deux demi-rotors (a2) et (a3). Une fois alimentée en courant continu, la bobine (a4) génère un flux magnétique noté Φ, qui traverse radialement l'entrefer séparant le rotor du stator en face des zones notées S du côté du rotor (a3) et en face des zones notées N du côté du rotor (a2) . Il en résulte que la moitié des conducteurs du stator (a1) ne reçoivent aucun flux magnétique rotorique et ne participent donc pas à la génération de couple moteur.

L'utilisation de cette topologie de machine a donc été réduite à des applications particulières, où le rotor doit par exemple tourner très vite, ou encore où la température ambiante de fonctionnement était incompatible avec les technologies de bobinage classique. L'application la plus remarquable de cette technologie consiste en une machine cryogénique, où l'enroulement en céramique ne pouvait pas supporter une mise en rotation.

Ces structures homopolaires présentent de manière générale le défaut principal de fournir la moitié du couple qu'une machine coplanaire similaire pourrait fournir. Ceci est la principale raison de leur faible utilisation industrielle. La machine homopolaire décrite dans l'état de l'art a conduit à la machine homopolaire dite double, décrite dans une version restreinte dans le brevet français n° FR 10 60923-1, qui est réalisée en assemblant des machines homopolaires à bobines annulaires, autour d'une bobine centrale magnétisante de forme annulaire. Le défaut de cette machine homopolaire double réside dans la suppression d'un pôle magnétique sur deux dans son rotor, ce qui entraîne une perte de couple importante.

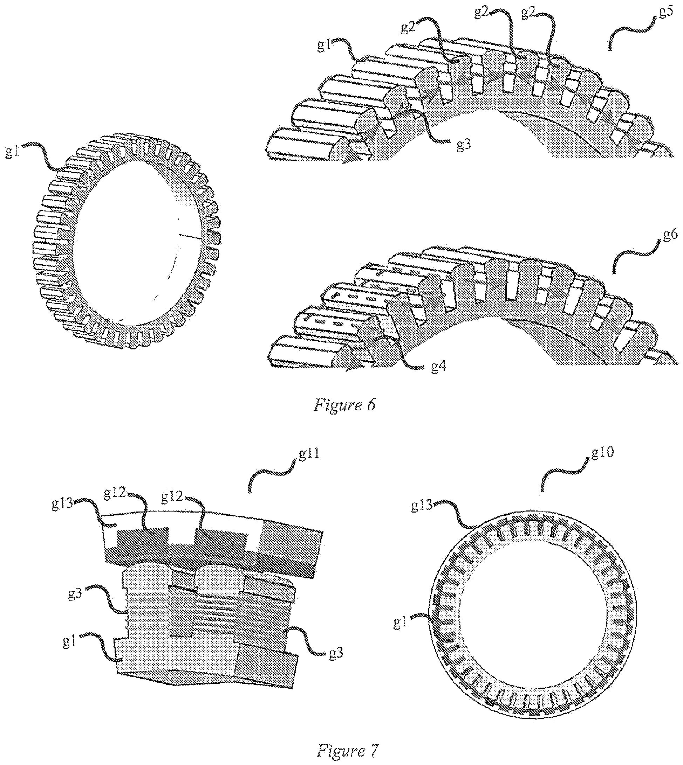

Les formes de pôle de l'état de l'art antérieur sont diverses, et peuvent par exemple prendre la forme, dans des machines monophasées, de pôles saillants. Une machine monophasée à pôles saillants est alors constituée d'un ou deux ensembles (g10) tels que décrits aux Figures 6 et 7. Une pièce (g1) constituée de matériau ferromagnétique reçoit, dans une version (g5), un bobinage qui peut être imbriqué (g3) ou, dans une version (g6), ondulé (g4). Le bobinage imbriqué (g3) se caractérise par le fait que chaque spire fait plusieurs tours autour d'un même pôle (g2), avant de passer au pôle (g2) suivant. Un bobinage ondulé (g4) se caractérise par le fait que chaque spire passe autour de tous les pôles (g2) de la pièce (g1) avant de repasser sur le même pôle (g2). Une combinaison ondulé-imbriquée est possible, l'état de l'art le décrit abondamment.

La pièce (g1) est associée à une pièce (g13), qui comporte des aimants (g12) ou un bobinage entourant des pièces polaires (g12). Comme apparaissant en figure 7, l'ensemble de droite (g10), grossi en (g11) dans la partie gauche de la figure, forme une machine monophasée à double saillance, où le courant dans les différentes bobines peut être continu ou alternatif. L'ensemble formé par (g12) et (g13) peut être réalisé en utilisant une structure à pôles lisses, telle que l'état de l'art la décrit abondamment, au travers d'encoches traversées par des bobines électriques. Les pièces (g13) peuvent être soit internes, soit externes, aux pièces (g1).

Il est possible de démontrer que les structures dites homopolaires (a20a) et (a20b) de la figure 4 sont en fait des machines monophasées, qui procèdent de la même topologie générique que (g1) tel que montré en figures 6 et 7.

Les brevets US 2011/089774 A, GB 917 263 A, FR 2 969 409 A et WO 2007/000054 A décrivent des machines homopolaires similaires au préambule de la revendication 1.

### CONTEXTE DE L'INVENTION

La présente invention se réfère comme indiqué auparavant à des machines électriques tournantes à structure homopolaire (également dénommée machine électrique à flux transverse), composée ou autre. Les machines électriques tournantes à structure homopolaire comportent classiquement un stator et un rotor, au moins le stator ou le rotor étant constitué d'au moins une bobine électrique portée par une culasse magnétique. La machine électrique tournante selon la présente invention comporte au surplus au moins deux pôles décalés angulairement d'une valeur d'angle sensiblement égale. Ces pôles peuvent être constitués par des pattes ou dents solidaires de ladite culasse annulaire et repliées parallèlement à l'axe de rotation de la machine, ou par des excroissances solidaires de ladite culasse annulaire, ou encore réalisés par des encoches ménagées dans la culasse, recevant des conducteurs.

Les parties tournantes, dites rotor dans les descriptions qui suivent, peuvent être multiples, et les parties fixes, dites stators, peuvent aussi être multiples. Il est alors possible de former une machine électrique tournante comportant un seul stator, ou groupe de stators, associée à un seul rotor, ou à plusieurs rotors ou groupes de rotors. Par extension, il est possible de former une machine électrique tournante comportant un nombre quelconque de stators ou de groupes de stators, associée à un nombre quelconque de rotors ou de groupes de rotors.

La notion de groupe de stators ou de rotors correspond dans ce document à la notion de phases électriques. Une machine électrique tournante polyphasée, comporte *Npe* phases électriques, c'est-à-dire comportant *Npe* groupes de bobines indépendantes, alimentées par un système polyphasé adapté. Ladite machine électrique tournante polyphasée est formée de *Npe* groupes de machines électriques tournantes monophasées élémentaires.

Dans tout ce qui suit, les rotors et les stators peuvent être montés de façon directe avec le rotor interne au stator, ou de façon inverse, avec le rotor externe au stator. Dans toutes les descriptions les induits et les inducteurs peuvent être placés au rotor et/ou au stator.

### EXPOSÉ DE L'INVENTION

La machine électrique tournante à structure homopolaire, comportant un nombre Npe de phases électriques, constituée :
- d'une juxtaposition, selon l'axe de rotation de la machine électrique tournante, d'au moins une paire d'induits ayant un nombre Np de pôles, placés de part et d'autre d'au moins une bobine inductrice, enroulée autour de l'axe de rotation de la machine électrique tournante, les induits adjacents étant décalés angulairement d'un angle électrique θs quelconque, de préférence compris entre 0° et 90°/2Np ;
- d'au moins un inducteur constitué au moins partiellement de matériau ferromagnétique, séparé des induits par un entrefer ;
et dans laquelle l'un des induits et de l'inducteur étant mobile en rotation et constituant au moins un rotor et l'autre des induits et de l'inducteur étant fixe et constituant au moins un stator et l'inducteur comporte le même nombre Np de barreaux inducteurs orientés dans une direction d'allure axiale, couvrant sensiblement la longueur axiale de la machine , les barreaux inducteur étant vrillés et rapportés à un support les reliant, leurs extrémités axiales étant angulairement décalées.

La bobine inductrice peut, dans certaines configurations, traverser radialement l'entrefer de part et d'autre de chaque barreau de l'inducteur, entrant d'un côté et ressortant de l'autre côté de manière à passer respectivement au-dessus et au-dessous de deux barreaux adjacents de l'inducteur, dans une direction radiale. Alternativement, la bobine inductrice est située en totalité entre les induits de la paire d'induits, et ne franchit pas l'entrefer.

Les barreaux inducteurs peuvent être scindés en plusieurs portions positionnées respectivement en regard des induits et de la zone comportant la ou les bobines inductrices, la ou les portions en regard de la zone comportant la ou les bobines inductrices étant solidaires des induits. Dans cette hypothèse, les portions des barreaux inducteurs solidaires de l'induit sont décalées angulairement relativement audit induit d'une valeur quelconque, avec une valeur préférentielle de 90°/2Np, prise entre le centre d'un pôle induit et le centre du barreau inducteur solidaire dudit induit.

Selon une possibilité, chaque induit des paires d'induits comporte une culasse magnétique reliant leurs pôles, lesdits induits étant reliés par des pièces polaires de retour de flux reliant les parois radiales des induits en regard. Alternativement ou additionnellement, les culasses peuvent être reliées par des pièces polaires de retour de flux entourant les parois non radiales des induits distales de l'inducteur. Dans nombre de configurations, les culasses et les pièces polaires de retour de flux sont d'allure cylindrique.

Selon une configuration possible, le secteur angulaire couvert par les pôles est de 120° électrique. Toujours selon une possibilité propre à l'invention, les induits des paires d'induits séparés par une bobine sont chacun constitués de plusieurs induits élémentaires.

Dans une alternative non revendiquée l'inducteur comporte Np/2 barreaux inducteurs orientés dans une direction d'allure axiale, couvrant sensiblement la longueur axiale de la machine et rapportés à un support les reliant à l'axe de rotation de la machine électrique tournante. Cette variante est adaptée aux machines pour lesquelles la bobine inductrice est située en totalité entre les induits de la paire d'induits, et ne franchit pas l'entrefer.

Selon encore une autre alternative, la bobine inductrice peut être remplacée par un aimant sensiblement annulaire magnétisé dans la direction de l'axe de rotation de la machine électrique tournante. Dans cette hypothèse, ledit aimant peut être disposé au contact d'au moins une pièce polaire ferromagnétique de concentration de flux.

La bobine inductrice peut par exemple être vrillée, annulaire ou de forme ondulée dans un plan transversal. Si la bobine inductrice est alimentée en courant alternatif, dans le cas d'une machine polyphasée, les bobines inductrices des différentes phases peuvent être couplées en étoile, triangle ou zig-zag.

De telles machines électriques tournantes à structure homopolaire composée peuvent être constituées de manière très flexible, et notamment comporter au moins un stator ou groupe d'une pluralité de stators associé à au moins un rotor ou groupe d'une pluralité de rotors. De même, un induit peut être commun à plusieurs inducteurs ou un inducteur peut être commun à plusieurs induits. Dans ce dernier cas, de préférence, une pièce de couplage en matériau ferromagnétique peut relier les plusieurs inducteurs ou les plusieurs induits.

Dans le cas d'une autre variante encore, avec une machine dont le rotor comporte des aimants permanents sur une paroi située en regard du ou des stators, les aimants peuvent être inclinés par rapport à un plan tangentiel à ladite paroi située en regard du ou des stators. Par ailleurs, des surfaces libres des pôles bordant l'entrefer peuvent être inclinées dans une direction axiale, de manière linéaire ou incurvée. De même, la surface libre d'un pôle bordant l'entrefer peut être asymétrique dans une direction transversale par rapport à un plan axial médian du pôle contenant l'axe de rotation.

On a vu auparavant qu'il existait plusieurs mises en œuvre possibles des pôles magnétiques dans les machines tournantes selon l'invention. Dans l'hypothèse où les pôles des induits sont constitués de dents comportant une jambe d'allure radiale reliée via un pied à la culasse et un bec d'allure axiale, lesdites dents de chaque induit étant séparées par une distance angulaire permettant l'emboîtement tête-bêche d'un autre induit à structure dentée identique en vue de constituer la paire d'induits autour de la bobine inductrice, le bec peut comporter au moins un décrochement en marche d'escalier. Ce décrochement est de préférence situé à une distance radiale de l'axe de rotation de la machine électrique tournante sensiblement égale à la distance radiale d'une paroi de la culasse s'étendant dans une direction axiale dont dépassent les dents. De plus, ce décrochement peut comporter une paroi située dans un plan transversal médian de la paire d'induits, utilisé pour l'emboîtement tête-bêche de deux induits.

Pour améliorer les caractéristiques magnétiques du moteur, les dents s'évasent de préférence via des oreilles latérales au niveau de leur liaison à la culasse. Elles peuvent par ailleurs aussi être distinctes de la culasse, et dans ce cas, la culasse peut présenter des évidements pour la fixation des dents.

Selon l'invention, la bobine inductrice peut être enroulée de façon vrillée, en sinusoïde, autour des pieds des dents des induits de la paire d'induits entourant la bobine inductrice. Pour faciliter le passage de la bobine inductrice, les sections des jambes des dents peuvent de préférence présenter, en au moins une surface cylindrique coaxiale à l'axe de rotation, des parois latérales parallèles entre elles, notamment d'un seul tenant ou en escalier. Alternativement encore, lesdites sections peuvent comporter des parois latérales courbes.

Selon une possibilité qui peut s'avérer intéressante pour la fabrication, les becs des dents peuvent d'ailleurs être distincts et rapportés sur les jambes.

Lorsque la machine électrique tournante de l'invention est polyphasée, elle est de préférence constituée d'une juxtaposition coaxiale de machines monophasées selon les revendications précédentes, régulièrement décalées d'un angle électrique de 360°/2Npe. Dans sa version polyphasée, elle peut alternativement être constituée d'une juxtaposition coaxiale de machines monophasées alignées angulairement, un déphasage interphase étant causé par la rotation, au niveau du rotor, des aimants ou des inducteurs bobinés ou des saillances polaires. Pour ces machines polyphasées, des bobines intermédiaires peuvent être disposées entre les machines monophasées.

La liste suivante regroupe de façon non-exhaustive différentes variantes possibles d'applications de l'invention dans une machine électrique tournante :
- machine synchrone avec rotor à aimants ou bobiné,
- machine synchrone avec rotor à aimants réalisés en plasto-aimants, c'est-à-dire formés d'une poudre magnétique imprégnée de résine,
- machine asynchrone avec rotor à cage ou bobiné,
- machine à réluctance variable, à rotor passif ou actif (aimanté).
- la disposition relative des différentes parties (a14), (a22) et (a21), pour former une machine de type (a20b) ou (a20a), conduit à une machine à stator extérieur ou à stator intérieur, dite inversée,
- machine monophasée, diphasée, triphasée ou polyphasée, obtenue par empilement axial de machines élémentaires (a20b) ou (a20a) correctement déphasées les unes par rapport aux autres d'un angle électrique sensiblement égal à un tour électrique (360° divisé par le nombre de paires de pôles) divisé par le nombre de phases, ledit déphasage angulaire pouvant être créé au niveau du rotor ou du stator,
- machine polyphasée, comportant au moins une phase structurelle, où chaque phase électrique est constituée de plusieurs machines élémentaires (a20b) ou (a20a) électriquement connectées en série ou en parallèle électriquement
- machine polyphasée, comportant au moins une phase structurelle, où les phases structurelle (a14) sont toutes alignées angulairement et où le déphasage inter-phase est causé par la rotation au niveau du rotor, soit des aimants, soit des inducteurs bobinés, soit des conducteurs de la pièce complémentaire (a22) ou (a21), soit des saillances polaires
- machine polyphasée, comportant au moins une phase structurelle, où les bobines (b3) sont divisées en plusieurs enroulements distincts, eux-mêmes couplés d'une phase à l'autre en zig-zag, étoile, ou triangle pour former une machine polyphasée complète
l'ensemble peut former aussi un transformateur statique, où toutes les parties (a14), (a22) et (a21) étant statiques, forment un déphaseur statique.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

### BRÈVE DESCRIPTION DES FIGURES

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, pour lesquelles :

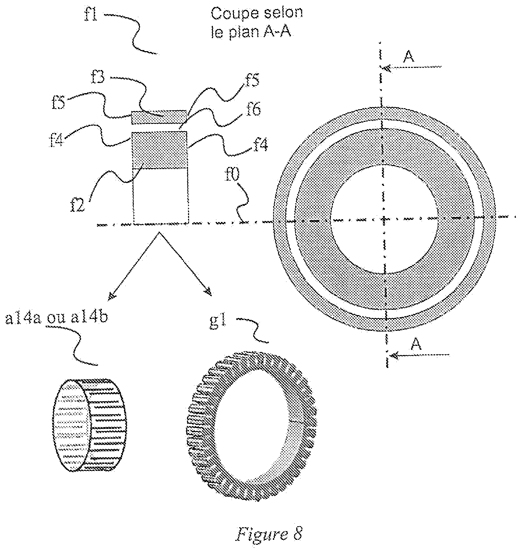

- La figure 8 représente schématiquement une machine électrique tournante monophasée

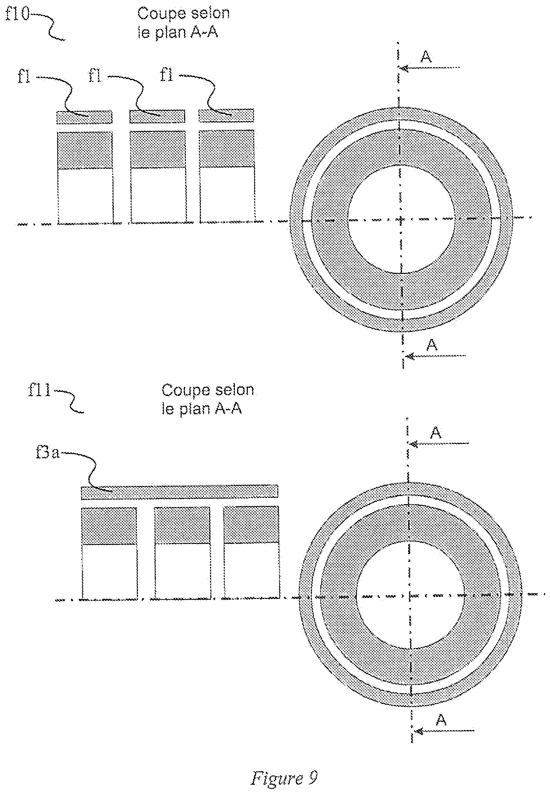

- La figure 9 montre de manière schématique une machine électrique tournante polyphasée ou à plusieurs machines électriques tournantes monophasées selon la figure 8 ;

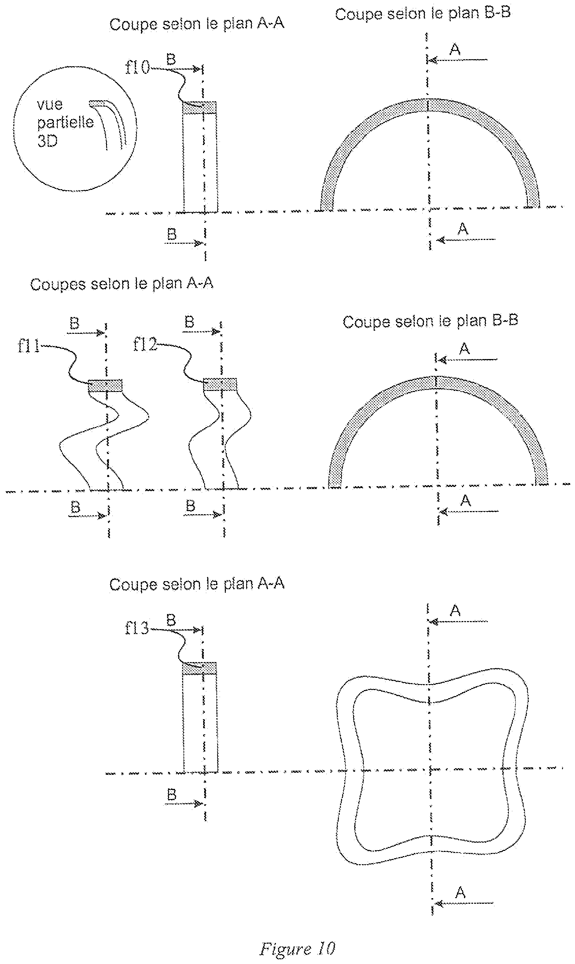

- la figure 10 montre différents types de bobines utilisées dans les machines électriques tournantes monophasées selon l'invention ;

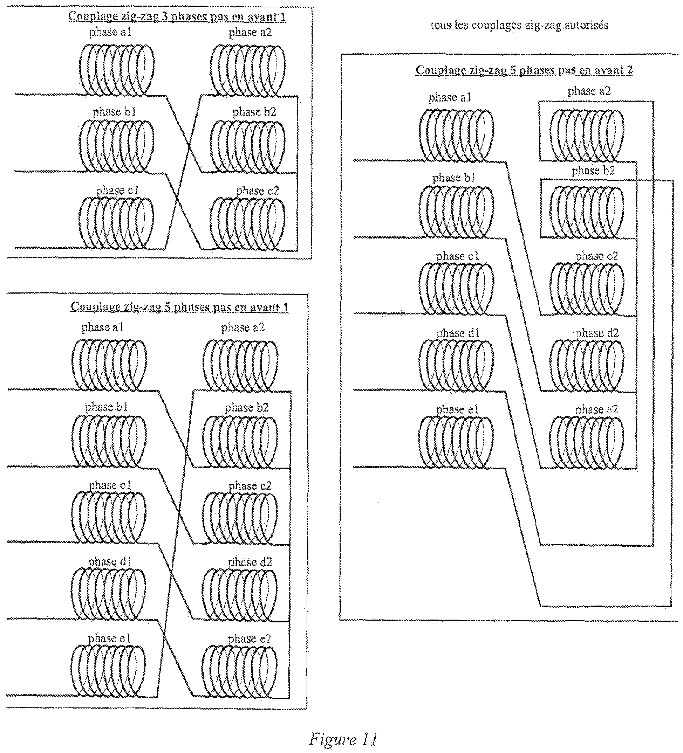

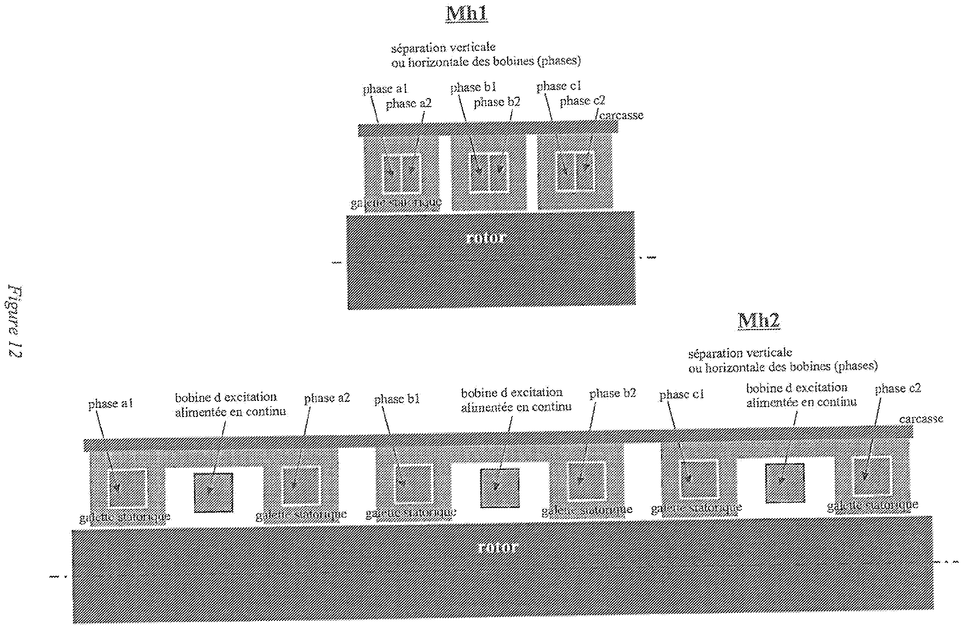

- Les figures 11 et 12 représentent les modes de couplage électrique utilisables pour les bobines de plusieurs machines électriques tournantes monophasées selon l'invention ;

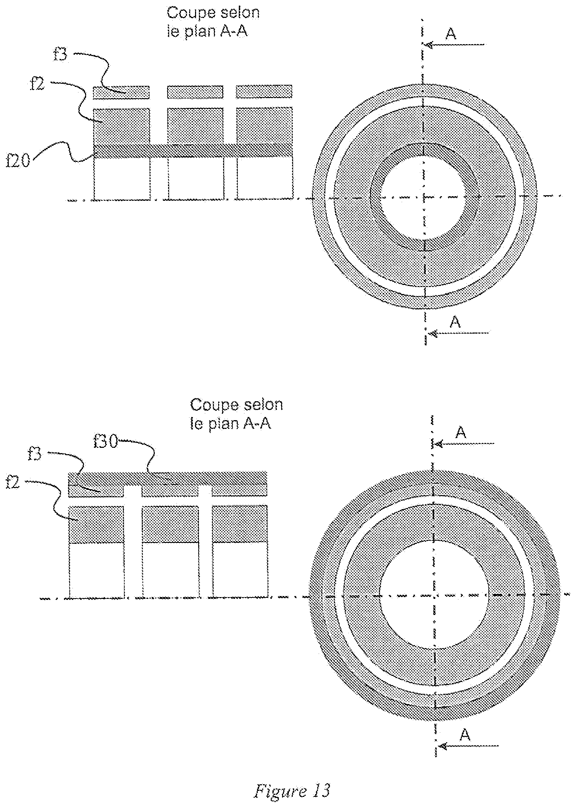

- La figure 13 illustre le couplage magnétique de pièces de machines électriques tournantes monophasées ou polyphasées ;

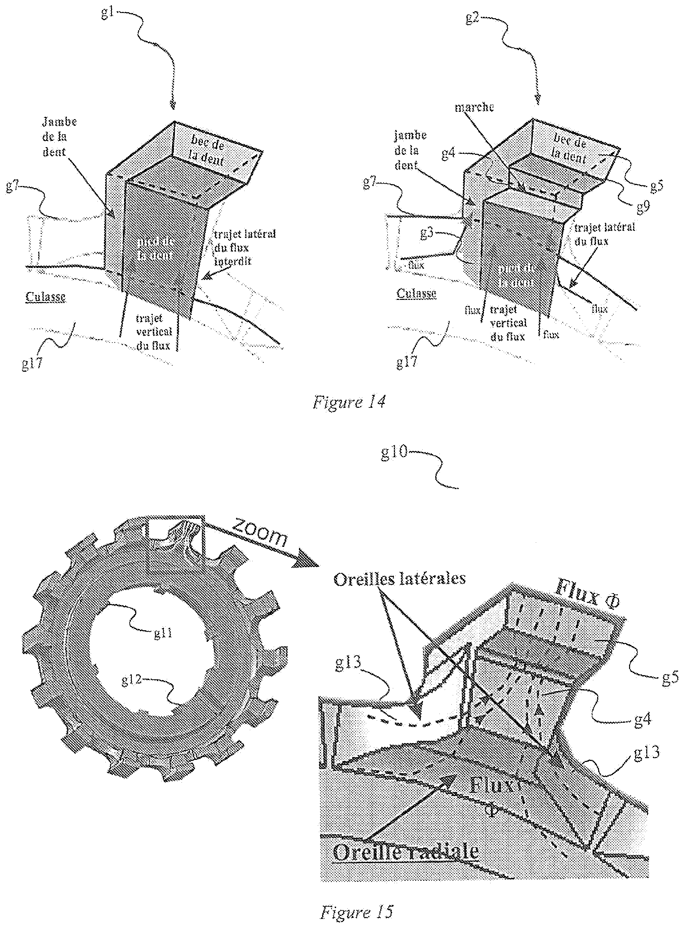

- La figure 14 montre un mode de réalisation d'une dent;
- La figure 15 propose un mode de réalisation alternative d'une dent ;

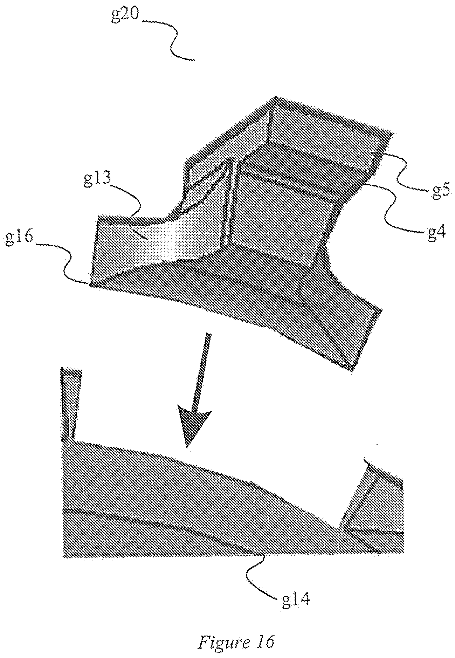

- La figure 16 représente un autre mode de réalisation alternative d'une dent ;

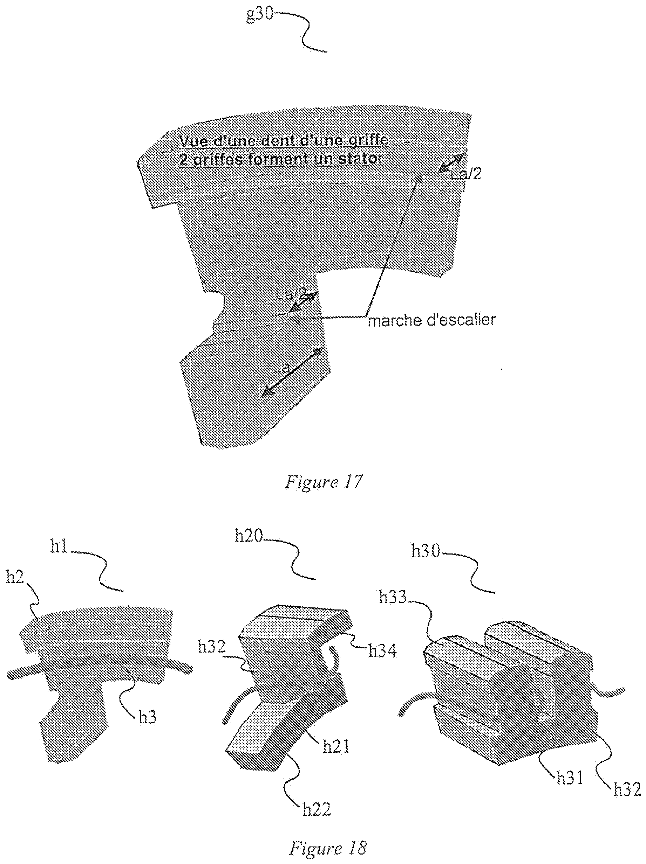

- La figure 17 montre une vue en perspective partielle d'une dent et d'une fraction d'une culasse d'un stator ;
- La figure 18 représente des fractions de culasses d'un stator avec des dents de modèles différents coopérant avec une bobine inductrice ;

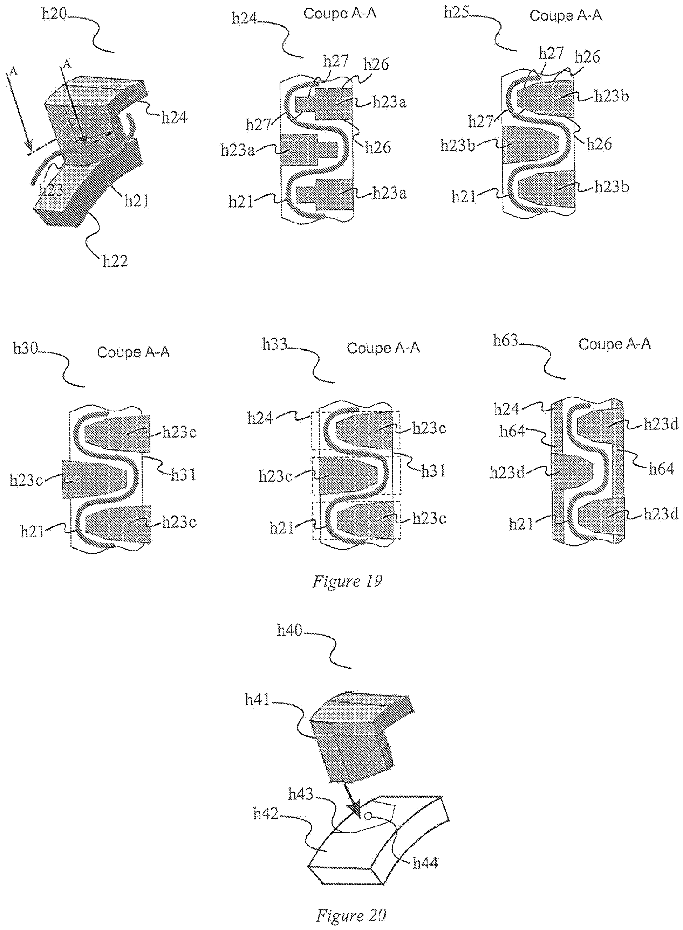

- La figure 19 illustre plusieurs types de sections transversales de pieds de dents ou pôles ;
- La figure 20 montre un mode de réalisation d'une dent séparée de la culasse ;

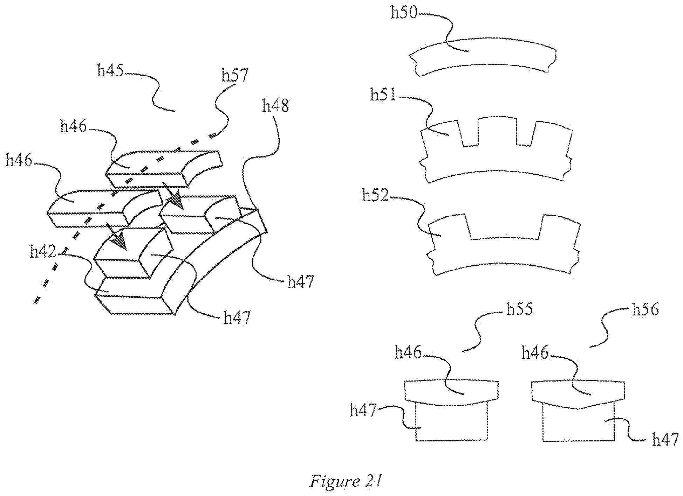

- La figure 21 représente un mode de réalisation des culasses dentées ;

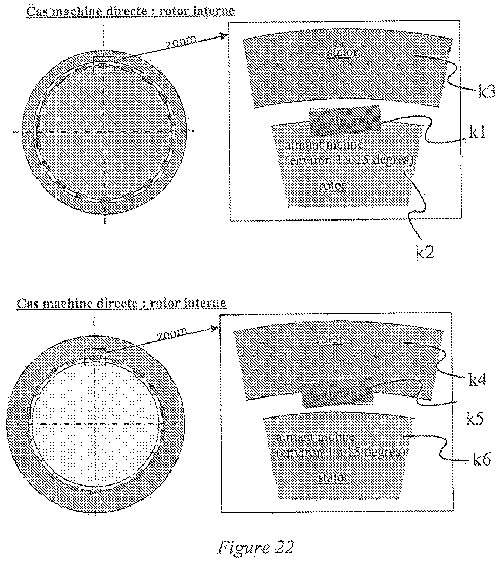

- La figure 22 montre un exemple d'implantation inclinée d'aimants d'un rotor constitué d'aimants permanents selon l'invention ;

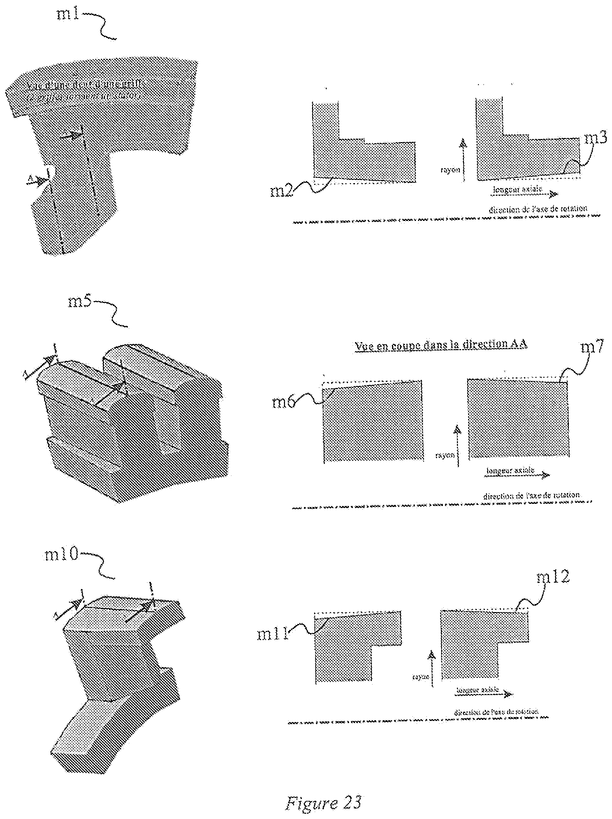

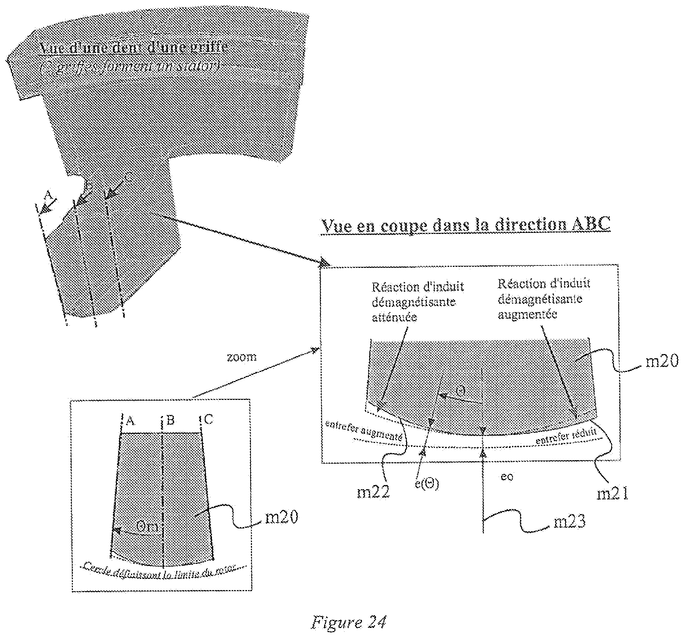

- Les figures 23 et 24 illustrent un mode de réalisation de modulation d'une largeur de l'entrefer par inclinaison ou asymétrie des pôles ;

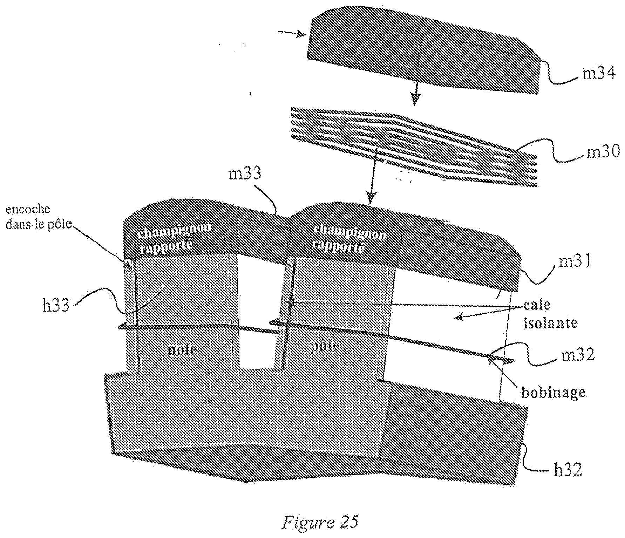

- La figure 25 présente un mode de réalisation particulier d'une dent ou d'un pôle, en deux parties;

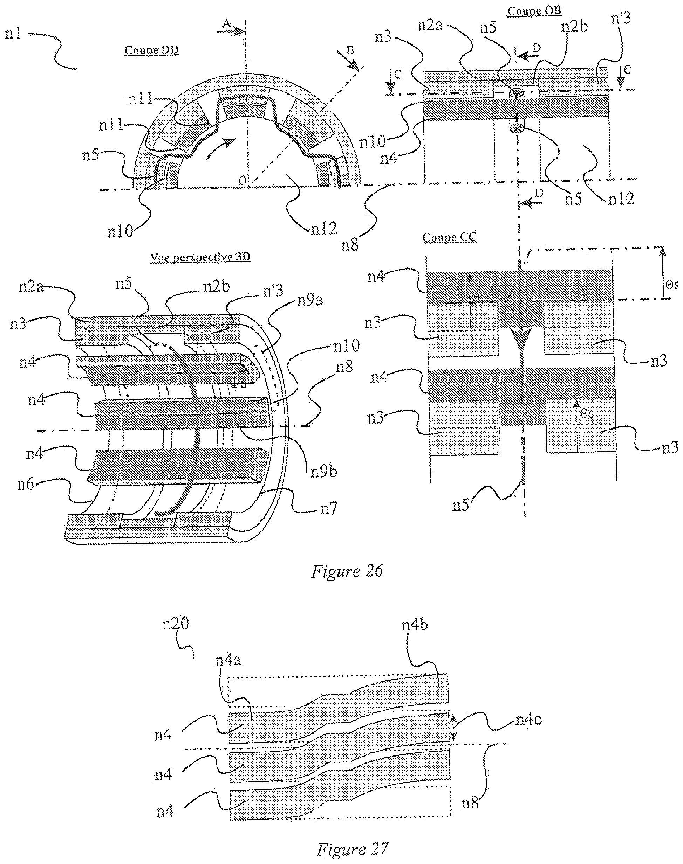

- La figure 26 présente une structure de moteur homopolaire à bobine inductrice passant alternativement sur et sous des barreaux inducteurs d'un inducteur ;
- La figure 27 illustre l'exemple de réalisation de barreaux inducteurs selon l'invention ;

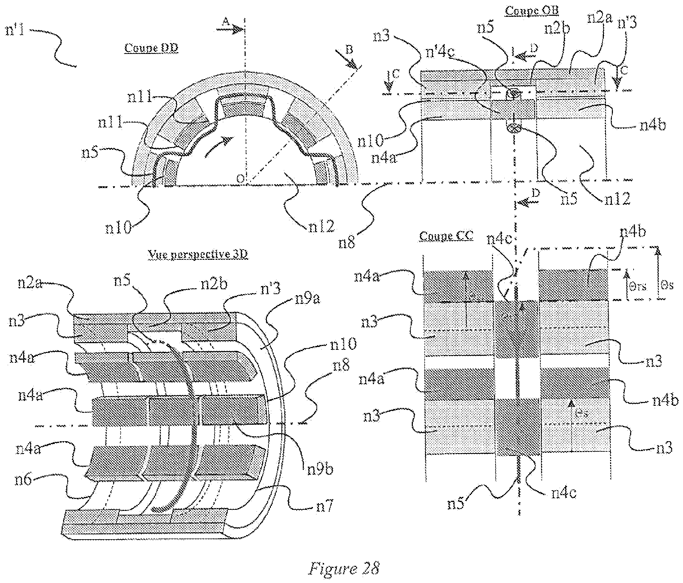

- La figure 28 montre un mode de réalisation alternatif de de barreaux inducteurs de la figure 26 ;

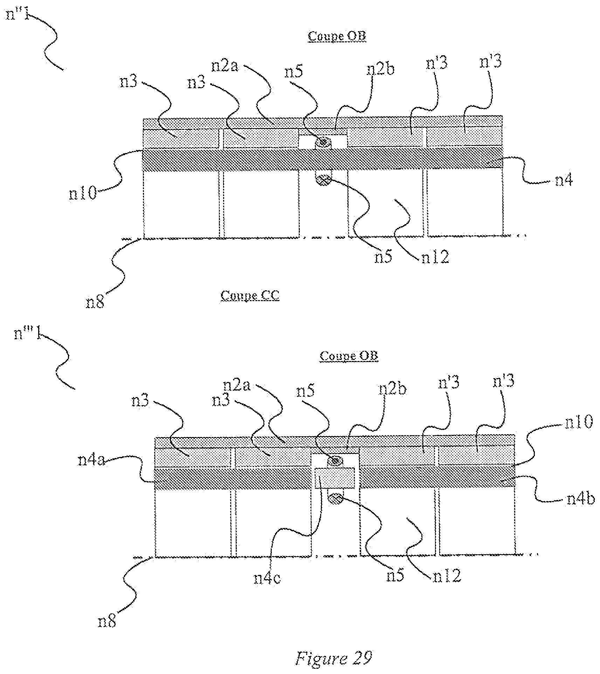

- La figure 29 représente une variante de réalisation à plusieurs induits placés de part et d'autre d'une bobine inductrice selon l'invention ;

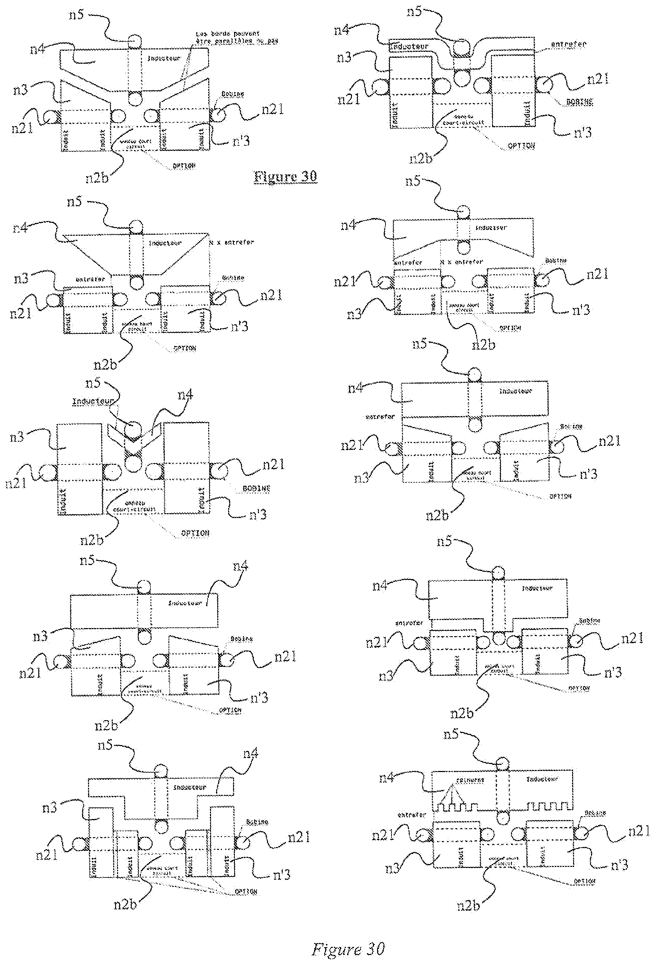

- La figure 30 montre plusieurs configurations possibles pour un moteur homopolaire selon l'invention ;

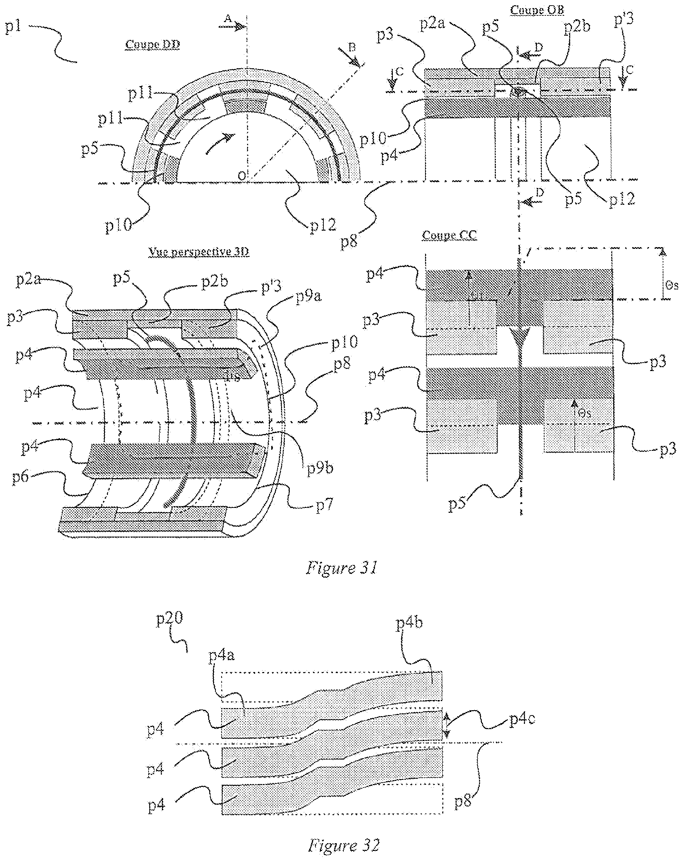

- La figure 31 représente un moteur homopolaire à structure double ;
- La figure 32 illustre un exemple de réalisation de barreaux inducteurs pour le moteur homopolaire à structure double de la figure 31 ;

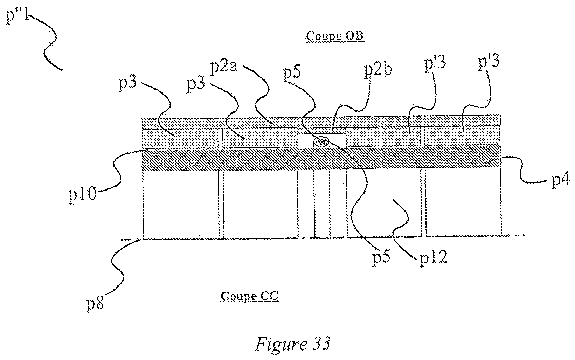

- La figure 33 représente une variante de réalisation à plusieurs induits placés de part et d'autre d'une bobine inductrice pour le moteur homopolaire à structure double de la figure 31 ;

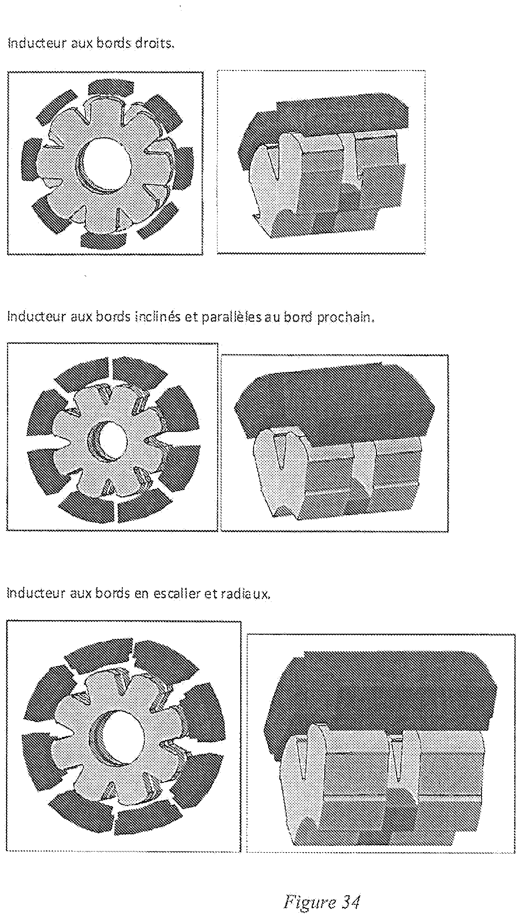

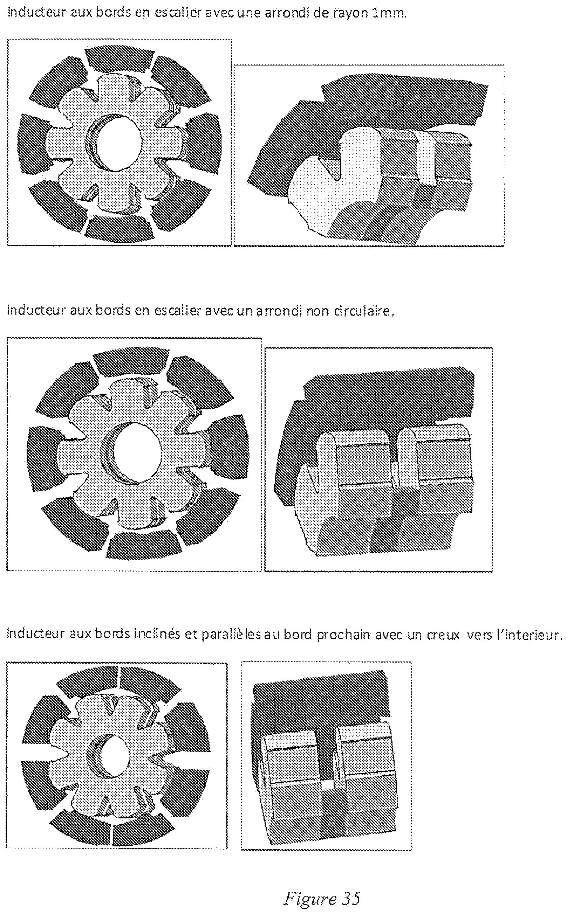

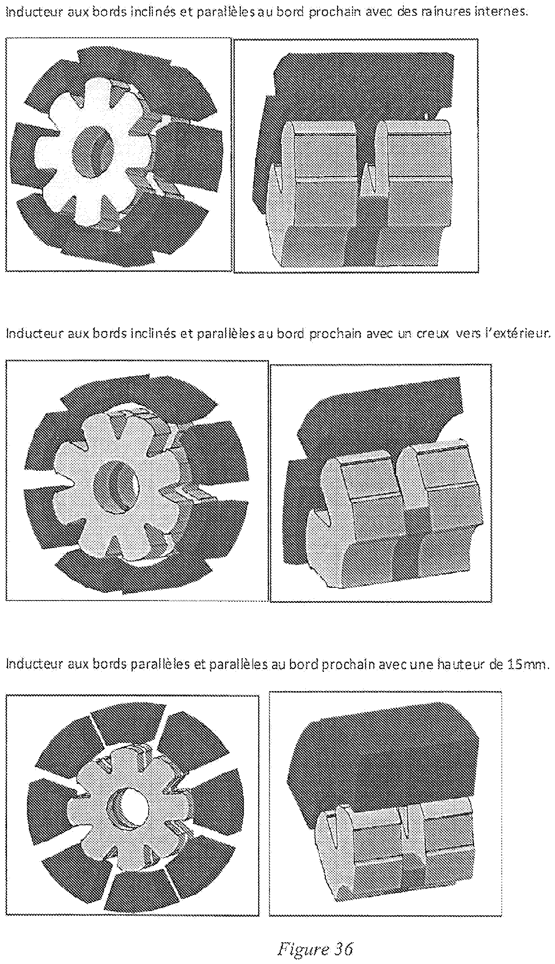

- Les figures 34 à 36 montrent différentes variantes de réalisation des pièces de moteurs homopolaires; et

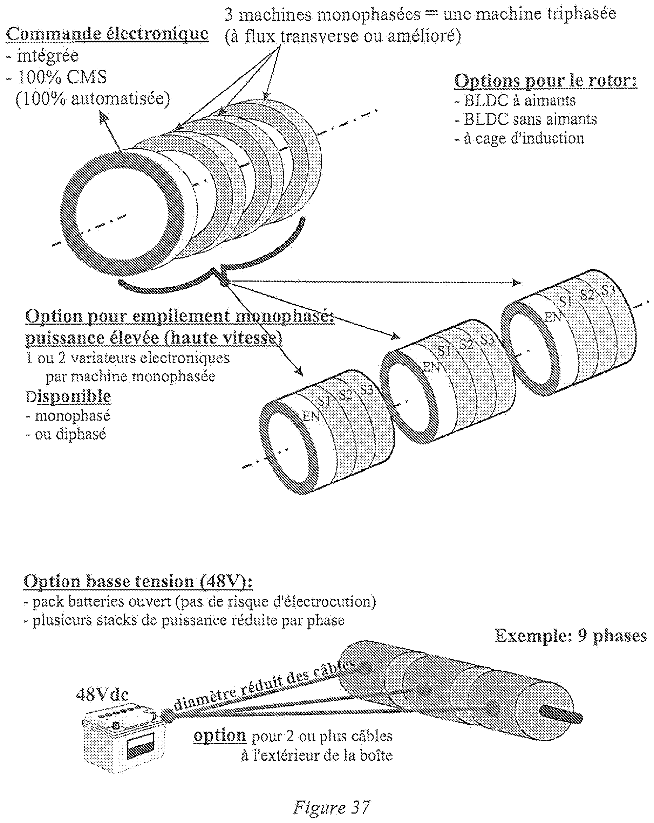

- La figure 37 représente différentes solutions de coopération entre un moteur selon la présente invention et une commande électronique.

Les inventions décrites dans ce document utilisent dans une première réalisation une machine monophasée (f1) décrite à la Figure 8, qui sera appelée phase structurelle, réalisée à l'aide de la réunion d'au moins deux pièces (f3) et (f2), sensiblement centrées autour du même axe (f0), lesquelles pièces sont séparées par un entrefer(f6) qui suit sensiblement un cylindre, lequel est sensiblement centré sur l'axe (f0), ou un disque, lequel est sensiblement centré sur l'axe (f0), ou une combinaison des deux (cylindre et disque), constituées chacune, et de façon indépendante, soit de pièces de forme à griffes (a14a) ou (a14b), soit de forme à pôles saillants (g1), soit de forme du type machine à pôle lisse, laquelle structure à pôles lisses est caractérisée par la présence de conducteurs disposés le long d'une surface d'entrefer, et soit enfouis dans des encoches, soit superficiels. Les conducteurs sont alors assimilables à une densité de courant linéique d'entrefer, tel que l'état de l'art le décrit abondamment, ladite machine à pôles lisses (g1a) pouvant être monophasée ou polyphasée, avec un nombre de phases quelconque, supérieur ou égal à un.

Les pièces (f2) et (f3), réalisées selon une forme (a14a) ou (a14b) ou (g1) ou en pôles lisses, se caractérisent par un nombre de pôles noté Np dans tout ce document, qui selon les conventions de l'état de l'art est égal au nombre d'alternances de passages dans l'entrefer (f6), du flux généré par les pièces (f2) et (f3), lesquels passages de flux sont considérés lorsque les pièces (f2) et (f3) sont alimentées indépendamment l'une de l'autre, chacune par un courant continu constant.

Les angles seront notés dans ce document de deux façons. Lorsque l'angle est dit mécanique, il correspond à l'angle absolu, compté sur un tour mécanique complet. Lorsque l'angle est dit électrique, il correspond à l'angle mécanique divisé par le nombre de paires de pôles, c'est-à-dire par Np/2. Tous les angles électriques sont comptés modulo 360° électrique.

La notion d'induit correspond à une pièce dont la bobine est alimentée en courant alternatif. La notion d'inducteur est liée à un ensemble de pièces dont la bobine est alimentée, soit en courant continu, soit en courant alternatif, ce qui sera le cas par exemple des stators de moteurs asynchrones d'induction. La notion d'inducteur inclut les pièces qui reçoivent des aimants. Une machine peut comporter un ou plusieurs induits et un ou plusieurs inducteurs. Une machine doit comporter au moins un induit et un inducteur.

Il faut préciser que la notion de saillance inclut les inducteurs à aimants.

La Figure 37 présente différentes solutions d'agencement entre le moteur électrique réalisé par l'invention et son variateur électronique.

Toutes les exemples, donc la majorité n'est pas revendiquée, dans ce document conduisent à la réalisation de machines électriques polyphasées, comportant au moins une phase électrique, avec les variantes formées par une combinaison quelconque des 34 options suivantes :
1. les induits sont fixes (cas des machines dites synchrones) ou bien tournants (cas des machines à courant continu), dans ce dernier cas l'alimentation de la machine se fait par l'intermédiaire d'un système électromécanique de type collecteur/balais, comme l'état de l'art le décrit pour les machines à courant continu à balais ;
2. chacune des pièces (f2) et (f3)est inducteur ou induit, rotor ou stator. Associées, elles forment une machine électrique tournante comportant un nombre de pôles électromagnétiques identique dans la réalisation ;
3. dans un premier cas, le ou les stators sont extérieurs et le ou les rotors sont intérieurs, ladite structure est dite directe, dans un deuxième cas le ou les stators sont intérieurs et le ou les rotors sont extérieurs, ladite structure est dite inverse, dans un troisième cas, une partie des stators est intérieure et l'autre partie des stators est extérieure, associée à une partie des rotors qui est intérieure et l'autre partie des rotors qui est extérieure ;
4. comme décrit dans la Figure 10, les bobines utilisées dans les machines monophasées peuvent être soit de forme annulaire (f10), soit de forme irrégulière, dans ce dernier cas, l'irrégularité peut se traduire dans une première réalisation par une ondulation quelconque (f11) ou (f12) autour d'un plan discoïdal sensiblement perpendiculaire à l'axe de rotation (f0), dans une deuxième réalisation par une ondulation (f13) autour d'un tube cylindrique sensiblement centré sur l'axe de rotation (f0) (l'ondulation peut déborder l'axe central ou les bords latéraux de la bobine), ou dans une troisième réalisation d'une combinaison des deux solutions précédentes ;
5. les dimensions des bobines (f10) dans le plan de coupe cylindrique peuvent être quelconques ainsi que leur forme ;
6. les flancs latéraux correspondant au bord latéral extrême selon l'axe (f0) des phases électromagnétiques formant les pièces (f2) et (f3), lesdits flancs latéraux (f4) et (f5) (voir en figure 8) des pièces (f2) respectivement (f3), sont dans une première réalisation alignés selon un même plan discoïdal centré sur l'axe (f0), ou dans une deuxième réalisation lesdits flancs latéraux (f4) et (f5) ne sont pas alignés, la pièce interne (f2) pouvant être axialement plus longue ou plus courte que la pièce externe (f3) ;
7. les pièces (f2) et (f3) peuvent utiliser une même structure, ou bien elles peuvent être de formes et dimensions différentes, ou bien utiliser une structure de machine monophasée différente ;
8. les pièces (f2) et (f3) comportent au moins une bobine ou au moins un aimant, lesquels fournissent un flux au niveau de l'entrefer qui les sépare, lequel flux suit une direction soit radiale, soit axiale, soit selon un chemin radial et/ou axial ;
9. une machine polyphasée est formée en alignant sensiblement autour du même axe (f0) au moins deux machines monophasées (f1), lesquelles forment une machine comportant soit autant de phases électriques que de machines monophasées (f1), soit un nombre de phases électriques inférieur au nombre de machines monophasées (f1), de préférence ledit nombre de machines monophasées (f1) est un multiple du nombre de phases électriques ;
10. une des deux pièces (f2) ou (f3) formant chaque machine monophasée (f1) peut être commune à la totalité (ou à une partie) des pièces opposées, par exemple à la Figure 9, la machine (f11) présente toutes les pièces (f3) réunies en une seule pièce (f3a), toutes les combinaisons sont possibles, c'est-à-dire réunir toutes ou partie des pièces (f2) en face de pièces (f3) différentes ou réunies de façon partielle ou complète, ou le contraire respectivement les pièces (f3) réunies en face de pièces (f2) de façon partielle ou complète, les flancs latéraux des pièces (f2)et (f3), ou des groupes de pièces (f2), ou des groupes de pièces (f3), peuvent ne pas coïncider dans un plan discoïdal centré sur l'axe (f0) ;
11. dans une première réalisation les machines monophasées (f1) peuvent être réalisées à partir de machines dites homopolaires (a14) (voir en figures 3 et 4), telles que décrites dans l'état de l'art et dans les inventions qui suivent, dans une deuxième réalisation les machines monophasées (f1) peuvent être réalisées à partir de machines à pôles saillants (g1), dans une troisième réalisation les machines monophasées (f1) peuvent être réalisées à partir de machines à pôles lisses (g1a), dans une quatrième réalisation les machines monophasées (f1) peuvent être réalisées à partir d'une combinaison quelconque de (a14), (g1) et à pôles lisses ;
12. chacune des pièces (f2) et (f3) comporte soit au moins une bobine électrique, soit au moins un aimant, soit au moins une cage en court-circuit telle qu'elle est connue dans l'état de l'art des machines asynchrones d'induction, soit aucune bobine ni aimant, ce cas correspondant à la machine à réluctance variable, notons que les deux parties (f2) et (f3) forment de préférence un système électromagnétique de même polarité, c'est-à-dire générant un flux électromagnétique comportant au niveau de l'entrefer autant de zones rentrantes que de zones sortantes, la surface de séparation étant considérée comme délimitant la jonction entre les pièces (f2) et (f3) ;
13. le couplage électrique des bobines des différentes machines monophasées (f1) peux former une étoile électrique, un triangle électrique, ou toute combinaison de ces deux formes, comme l'état de l'art le propose par exemple avec le couplage zig-zag, tel que décrit aux Figures 11 et 12 ;
14. le nombre de phases électriques vaut au moins un, et peut prendre toute valeur supérieure à l'unité ;
15. le nombre de paires de pôles de chaque machine monophasée (f1) est soit identique, soit différent afin de former une machine multi-vitesses ;
16. les différentes machines monophasées (f1) alignées axialement sont soit jointives, soit elles sont séparées entre elles avec une cale de séparation axiale, et/ou des bobines intermédiaires ;
17. le décalage angulaire, selon un plan discoïdal centré sur l'axe (f0), entre les différentes machines monophasées (f1) alignées axialement est libre, avec la condition que la somme de tous les décalages angulaires successifs entre les différentes machines monophasées (f1) depuis la première machine jusqu'à ladite première machine, soit égal à zéro pour une machine monophasée, ou soit égal à un demi-tour électrique (180°) pour une machine diphasée, ou soit égal à un tour électrique complet (360°) pour les polarités supérieures ou égales à trois phases, de façon préférentielle ledit décalage angulaire est sensiblement similaire pour toutes les machines monophasées (f1) ;
18. le décalage angulaire, selon un plan discoïdal centré sur l'axe (f0), entre les différentes machines monophasées (f1) peut être réparti sur les deux pièces (f2) et (f3) les formant, soit de façon symétrique, soit de façon symétrique ou asymétrique régulière ou irrégulière, soit en le concentrant sur une seule des deux pièces (f2) ou (f3), la pièce opposée étant alors formée de pièces alignées ;
19. les bobines utilisées dans les machines monophasées (f1) peuvent être réalisées avec du fil conducteur choisi de façon non-exhaustive parmi la liste suivante, de façon homogène ou mélangée : le cuivre, l'aluminium, un matériau polymère... ;
20. les bobines utilisées dans les machines monophasées (f1) peuvent être réalisées avec du fil conducteur isolé par l'un quelconque ou une combinaison quelconque des procédés choisis de façon non-exhaustive parmi la liste suivante : soit un isolant électrique souple ou rigide, formé d'un enrubannage, un résinage liquide ou pâteux, appliqué par trempage, pinceau, immersion, pistolet, lequel est séché par gouttage ou par cuisson au four ou par séchage naturel, lequel est affiné par un passage sous vide d'air ;
21. les bobines utilisées dans les machines monophasées (f1) peuvent être réalisées avec du fil conducteur isolé par un isolant électrique qui peut être de l'alumine obtenue par oxydation d'aluminium, ou une céramique rapportée et transformée à froid ou par cuisson de la bobine finale ;
22. les bobines utilisées dans les machines monophasées (f1) peuvent être réalisées avec du fil conducteur dont la forme est choisie de façon non-exhaustive parmi la liste suivante : ronde, elliptique, carrée, rectangulaire, trapézoïdale, octogonale, hexagonale, en bande fine ;
23. les bobines utilisées dans les machines monophasées (f1) peuvent être réalisées avec du fil conducteur qui reçoit un système d'isolation complémentaire à l'isolation de chaque conducteur élémentaire, lequel système d'isolation peut être appliqué, soit sur le groupe de fils formant une bobine complète ou partielle, soit directement sur les pièces ferromagnétiques formant le circuit électromagnétique ;
24. il est possible de combiner une machine à pôles lisses avec une ou plusieurs machines monophasées, cela est particulièrement intéressant pour réaliser une machine asynchrone ;
25. il est possible de coupler magnétiquement tout ou partie des pièces (f2) formant une machine polyphasée ou monophasée, par une pièce (f20), telle que représentée à la Figure 13, ladite pièce (f20) étant réalisée en matériau ferromagnétique, ladite pièce (f20) est de forme sensiblement cylindrique ou sensiblement discoïdale, ledit couplage permet d'améliorer le couplage électrique entre phases structurelles successives ;
26. il est possible de coupler magnétiquement tout ou partie des pièces (f3) formant une machine polyphasée ou monophasée, par une pièce (f30), telle que représentée à la Figure 13, ladite pièce (f30) étant réalisée en matériau ferromagnétique, ladite pièce (f30) est de forme sensiblement cylindrique ou sensiblement discoïdale, ledit couplage permet d'améliorer le couplage électrique entre phases structurelles successives ;
27. chacune des pièces ferromagnétiques utilisées dans les inventions peut être réalisée avec l'une quelconque des solutions technologiques, choisie parmi la liste suivante non-exhaustive : tôle ferromagnétique emboutie ou découpée isolée droite ou vrillée et assemblée maintenue par poinçonnage ou soudure etc., acier massif, poudre de fer pressée à froid ou à chaud, poudre de fer pressée à froid ou à chaud puis cuite à chaud, ferrite, poudre de fer frittée ;
28. lorsque des aimants sont utilisés pour former le rotor d'une machine monophasée (f1), (f10) ou (f11), il est possible d'incliner lesdits aimants par rapport à un plan tangentiel à un cylindre centré sur l'axe de rotation de la machine, comme le décrit la Figure 22, dans le cas de la version directe (k1), (k2), (k3) et dans le cas de la version inversée (k4), (k5), (k6) ;
29. les parties supérieures, qui sont en regard de l'entrefer, des dents ou des pôles peuvent être inclinées dans le sens axial, tel que le présente par exemple la Figure 23, dans trois réalisations différentes (m1), (m5) et (m10), l'inclinaison peut suivre une droite, ou une courbe de forme quelconque, l'intérêt de cette inclinaison est de provoquer une saturation partielle de la zone correspondant au plus petit entrefer, afin de moduler la réaction d'induit ;
30. les parties supérieures (m20), qui sont en regard de l'entrefer, des dents ou des pôles peuvent être symétriques ou asymétriques dans le sens polaire, tel que le présente par exemple la Figure 24, où l'angle θ représente l'angle électrique compté à partir du centre (m23) de la dent ou du pôle, et où entrefer e(θ) peut soit être constant, soit suivre la loi e(θ)=eo/cos(θ), soit suivre une loi différente selon le signe de θ qui peut par exemple être e(θ)=eo pour les angles θ positifs, et e(θ)=eo/cos(θ) pour les angles θ négatifs, soit suivre une fonction quelconque linéaire ou non, soit suivre une loi linéaire en forme de pans coupés, arrondie, elliptique ;
31. l'angle électrique qui définit le bord extrême de la dent ou du pôle (m20) a une valeur optimale de 60° électrique, lequel angle électrique est compté à partir du centre du pôle ;
32. la Figure 25 présente une réalisation astucieuse d'une dent (h20) ou d'un pôle (h30), dans laquelle la bobine imbriquée (ou ondulée) (m30) est insérée sur le corps de la dent (h33), lequel reçoit ensuite son chapeau (m34), de cette façon la bobine (m30) peut être façonnée à part, avant son insertion sur (h33) ;
33. les bobinages des différentes pièces (f2) et (f3) composant chaque machine monophasée (f1), peuvent être réalisés de façon indépendante pour chacune d'entre elles de façon imbriquée ou ondulée ;
34. l'alimentation des bobines des pièces (f2) ou (f3) peut être électronique, ou elle peut utiliser un collecteur mécanique à balais, tel que ceux utilisés dans les machines à courant continu.

Comme on l'a vu auparavant, l'un des aspects importants de ce type de machines réside dans la forme des dents ou pôles. En particulier, au sens de la présente invention, le changement de la forme de la dent ou d'un pôle d'une pièce (f2) ou (f3) de machine monophasée est prévu, afin d'en réduire le flux de fuites. Considérons une machine polyphasée (f10) ou (f11) telle que décrite à la Figure 9, laquelle machine est composée d'un empilement axial de machines monophasées (f1) de la figure 8.

La Figure 3 décrit l'état de l'art d'une machine monophasée (a14) à griffes symétriques. Cette Figure 3 explique que le flux d'entrefer passe entièrement dans la section de flux réduite au niveau de l'emmanchement entre le pied de la dent et la culasse statorique.

La Figure 14 décrit une amélioration (g1), connue de l'état de l'art au problème précédent de concentration de flux à l'emmanchement du pied de dent sur la culasse statorique.

La Figure 14 présente une invention (g2) qui permet de diminuer fortement la concentration de flux au niveau de l'emmanchement du pied de dent sur la culasse statorique. Le pied d'une des dents, utilisée dans une griffe (a14), (g3) reçoit une marche d'escalier (g4), qui permet de ramener latéralement le flux vers le corps de la culasse (g17). Le flux magnétique ramené depuis le bec (g5) de la dent vers la culasse statorique (g17), suit alors un chemin non plus radial, mais tridimensionnel. Il est possible de réaliser plusieurs marches d'escalier (g4), ou encore de donner au pied de dent une forme inclinée axialement (selon le sens de rotation). De façon préférentielle, le décrochement (g4) est situé à une distance radiale (g9) de l'axe de rotation, sensiblement égale à celle (g7) du bord haut de la culasse (g17).

La Figure 15 présente une forme améliorée (g10) de la forme (g2), laquelle forme comporte deux oreilles latérales (g13), formées dans un sens axial (selon le sens de rotation), lesquelles oreilles latérales (g13) permettent une concentration de flux tridimensionnelle au niveau du bec d'encoche. La présence d'une marche d'escalier (g4) sur le bec de dent (g5) est optionnelle, mais elle permet d'améliorer le couple fournir par le moteur.

Une machine monophasée homopolaire (également dénommée machine électrique à flux transverse), telle que (a14a) ou (a14b), est réalisée en associant deux griffes identiques (g2) ou (g10) en vis à vis, lesquelles griffes (g2) ou (g10) enserrent une bobine (a15). Des ergots de calage angulaire (g11) et/ou (g12) peuvent être ménagés dans les griffes (g2) ou (g10), afin d'assurer leur calage angulaire adéquat, sensiblement d'un demi-tour électrique (180°).

Dans une réalisation particulière, les pièces (g2) et (g10) peuvent être dissymétriques dans un plan discoïdal, cylindre polaire, ou axisymétrique.

Dans une autre réalisation particulière (g20), telle que décrite à la Figure 16, les pièces (g2) et (g10) des figures 14 et 15 peuvent être constituées de plusieurs pièces indépendantes, par exemple l'ensemble (g16) réunissant les formes (g4), (g5) et (g13) peut être inséré dans une pièce principale (g14) formant culasse. Un dispositif de maintien est requis pour assurer la cohésion de la griffe formée de la réunion des pièces (g16) et (g14), ledit dispositif de maintien pouvant être un système de vissage, de rivetage, de clavetage, ou une insertion en force à chaud ou à froid, le résinage ultérieur de la machine monophasée ainsi réalisée, assurant le maintien de l'ensemble en place, sous la contrainte électromagnétique. Dans le cas de la présente réalisation (g20), la pièce (g14) peut être réalisée en tôle ferromagnétique, laquelle tôle peut être empilée, dans une réalisation astucieuse parmi d'autres, selon des plans successifs discoïdaux et les pièces (g16) en poudre de fer compressée.

Les exemples (g2), (g10) et (g20), sont adaptés à une machine inverse (a20a) (voir en figure 4) . La transposition à une machine directe (a20b) est immédiate, par retournement des formes dans un sens radial, autour du cylindre formé par l'entrefer. La Figure 17 présente une réalisation partielle (g30) adaptée à une machine de type (a20b) des inventions (g2), (g10) et (g20).

La marche d'escalier (g4) peut être réalisée dans un plan discoïdal médian (par rapport au cylindre contenant l'ensemble) de la griffe (g10), mais elle peut aussi être réalisée dans un plan situé en un autre endroit.

La face latérale selon un plan discoïdal de la marche d'escalier (g4) peut suivre une portion de disque centré sur l'axe de rotation du moteur, mais elle peut aussi suivre une portion tronconique.

La Figure 18 présente la mise en œuvre de dents ou pôles améliorés selon l'invention. La réalisation d'une partie (a14) de machine homopolaire (également dénommée machine électrique à flux transverse), selon le principe (a14a) ou (a14b) de la figure 3 en une ou deux pièces, symétriques ou non, utilise la forme inventive (h1) de la figure 18, obéissant aux caractéristiques décrites précédemment. Ladite forme (h1) comporte une pièce (h2), qui reçoit une bobine annulaire (h3).
Si ladite bobine (h3) est vrillée selon une forme (f11), ou (f12), ou (f13) de la figure 10, il est alors possible de réaliser la forme (h20), où la bobine (h21) est enroulée autour des pieds de dents (h23). En allant plus loin dans le concept, la forme (h30) apparaît, qui correspond à une machine monophasée classique telle que montrée en figure 7, où le bobinage (h31) peut être réalisé de façon imbriquée (g3) ou ondulée (g4). Cette invention permet d'augmenter le flux qui transite dans le pied (h23) de la dent, donc le couple fourni par la machine.

La Figure 19 présente les formes de jambes de dents (h23) possibles, en décrivant avec les plans de coupe A-A de la jambe de dent (h23), deux solutions (h24) et (h25) parmi d'autres. Dans la solution (h24) les pieds de dents (h23a) ont une section formée d'encoches, dont les formes précises peuvent adopter l'une quelconque des solutions prises dans la liste suivante, non exhaustive :
1. les faces (h26) sont parallèles entre-elles ;
2. les faces (h27) sont parallèles entre-elles ;
3. les faces (h26) ne sont pas parallèles entre-elles et suivent une forme tronconique, de préférence orientée selon le modèle (h25) ;
4. les faces (h27) ne sont pas parallèles entre-elles et suivent une forme tronconique, de préférence orientée selon le modèle (h25) ;
5. les faces (h26) suivent une forme courbe, formée de portions d'ellipses, de cercles, ou toute autre fonction quelconque ;
6. les faces (h27) suivent une forme courbe, formée de portions d'ellipses, de cercles, ou toute autre fonction quelconque ;
7. le pied d'encoche (h23c) déborde axialement de la culasse (h22), ce qui est illustré par (h20), ledit débordement peut être symétrique ou non ;
8. le chapeau (h24) déborde axialement, de façon symétrique ou non, ce qui est illustré par (h33) ;
9. la culasse (h42) est distincte du pied d'encoche (h41), comme le représente la Figure 20, pour former un ensemble (h40), où la jambe de dent (h41) est posée ou emboîtée sur la culasse (h42), cette solution est particulièrement avantageuse, car elle permet de réaliser les pieds de dents en technologie des poudres de fer par compression radiale ;
10. le pied de dent (h41) est inséré dans la culasse (h42), soit en force dans une marque (h43), soit par un moyen de serrage, qui peut être un rivet, une vis ou tout autre moyen, utilisant un trou (h44), ménagé dans la culasse (h42) ou dans la jambe de dent (h41) ;
11. la culasse (h42) est réalisée en tôle ferromagnétique, laquelle tôle ferromagnétique dans une réalisation astucieuse, parmi d'autres, est empilée selon la longueur axiale de la machine (h40) ;
12. la culasse (h42) est réalisée en une ou deux pièces de longueur axiale identique ou non ;
13. la réalisation (h45) de la figure 21 présente une même pièce (h48) comportant la culasse (h42) et les jambes de dents (h47). Une réalisation possible consiste à fabriquer cette pièce (h48) avec des tôles feuilletées empilées, dans une réalisation astucieuse parmi d'autres, selon un plan discoïdal perpendiculaire à l'axe de rotation du moteur, lesquels paquets de tôles sont scindés en deux ou trois groupes, ou plus, correspondant chacun à une denture nécessitée par la forme exigée par (h48), utilisant soit éventuellement les formes de tôle (h50) sans encoche pour le milieu ou les bords de (h48), soit éventuellement pour le milieu de (h48) les formes de tôle (h51) comportant deux jambes de dents (h47) par tour électrique (360°), soit éventuellement pour les bords de (h48) les formes de tôle (h52) comportant une seule jambe de dent (h47) par tour électrique (360°. Dans la réalisation (h48) les chapeaux (h46) sont rapportés par-dessus les jambes de dents (h47), ces chapeaux (h46) peuvent être maintenus par une vis, un œillet, une clavette ou tout autre dispositif de serrage, ces chapeaux (h46) peuvent aussi être posés sur les jambes de dents (h47), qui les reçoivent dans une forme triangulaire (h56) ou elliptique (h55), puis ils sont maintenus par une frette extérieure (h57), dans une réalisation particulièrement avantageuse, les chapeaux (h46) sont réalisés en poudre de fer compressée ;
14. la réalisation (h63) de la figure 20 présente des pièces (h64) qui rendent borgnes les côtés des griffes (h20), lesquelles pièces (h64) peuvent former une seule pièce avec (h23d) ;
15. si les pièces (h20) sont réalisées en deux demi-pièces, identiques ou distinctes, alors leur plan de jonction peut être un anneau discoïdal lisse, ou un même anneau ondulé sensiblement dans la direction axiale, par exemple en suivant la forme des becs de dents (h34) ;
16. les pièces annulaires formant les griffes sont réalisées en plus d'une pièce, lesquelles sont assemblées ensuite au moyen de dispositifs d'assemblage.

Ces améliorations apportées aux dents ou pôles peuvent être utilisées dans un moteur homopolaire (également dénommé moteur électrique à flux transverse) à structure dite composée (n1) tel que montré en figure 26. Ledit moteur est constitué d'un empilement axial d'au moins deux induits (n3) et (n'3), séparés par au moins une bobine (n5) enroulée autour de l'axe de rotation (n8). La bobine (n5) n'est pas forcément annulaire. Les induits (n3) et (n'3) peuvent être réalisés soit selon une structure à griffe (a14a) ou (a14b), soit selon une structure à pôles saillants (g1), soit selon une structure à pôle lisse, ayant nombre de phases électriques quelconque. Dans une réalisation astucieuse, les structures des pièces (n3) et (n'3) sont identiques, choisies parmi le groupes (a14a) ou (a14b) de la figure, ou (g1) de la figure 7, ou encore à pôles lisses. Dans une autre réalisation, elles peuvent être différentes, l'une de l'autre.

Les induits (n3) et (n'3) sont situés en face d'un inducteur composé d'un groupe de plusieurs barreaux (n4) de forme quelconque, lesquels sont disposés le long d'un cylindre sensiblement concentrique à l'axe de rotation (n8). Les induits (n3) et (n'3) sont séparés de l'inducteur par un entrefer (n10). L'inducteur est commun à tous les induits (n3) et (n'3), il est passif c'est-à-dire composé de façon complète ou partielle de matériau ferromagnétique. L'excitation de l'inducteur peut être active dans une première réalisation grâce à la bobine (n5) fixe s'enroulant sensiblement autour de l'axe de rotation (n8). La bobine (n5) peut être mobile dans une autre réalisation. L'excitation de l'inducteur peut être passive dans une autre réalisation, étant alors réalisée avec au moins un aimant de forme par exemple annulaire s'enroulant sensiblement autour de l'axe de rotation (n8), de préférence fixe, mais ledit aimant peut aussi être mobile.

Les bobines des induits (n3) et (n'3) sont parcourues par des courants alternatifs notés I3 et I'3, qui comportent un déphasage temporel noté ΦI3.

Les induits (n3) et (n'3) comportent un même nombre de pôles, noté Np, identique au nombre de barreaux inducteurs (n4) dans une réalisation, ou différent dans une réalisation non revendiquée dans laquelle le nombre de barreaux est divisé par deux. La bobine (n5) traverse radialement les surface de séparation angulaires (n11) entre les différents barreaux inducteurs (n4) un nombre de fois égal au nombre de pôles Np de l'induit. Elle passe donc Np/2 fois au-dessus des barreaux (n4) et Np/2 fois en dessous des barreaux (n4), les termes dessus/dessous étant comptés dans un sens radial.

La Figure 26 présente la structure générale de la machine homopolaire (également dénommée machine électrique à flux transverse) composée (n1) selon l'invention, dans une réalisation correspondant à une seule machine alternative monophasée ou à deux phases structurelles de machine homopolaire composée, avec une structure directe de type (a20b)(voir en figure 4) à pôles saillants (g1) (voir en figure 7). Les démonstrations qui suivent peuvent être transposées à une machine inverse de type (a20a) de la figure 4, en effectuant une symétrie de toutes les pièces autour d'une surface cylindrique centrée sur l'axe (n8) et située au milieu de l'entrefer (n10). Dans la réalisation (n1), de façon préférentielle, l'inducteur est fixe et l'induit mobile, ce qui est le cas d'une machine à courant continu à collecteur mécanique.

Le principe de fonctionnement de ladite machine (n1) vient de l'enroulement de la bobine (n5) autour des barreaux inducteurs (n4), alternativement en dessous et en dessous. De cette manière, des pôles magnétiques équivalents Nord et Sud sont créés dans l'entrefer, générant une figure de pôles magnétiques antisymétrique entre les faces latérales (n6) et (n7) de la machine. L'inducteur se comporte de façon équivalente à un groupe d'aimants posés à l'intérieur de l'induit (n3) / (n'3). Le flux magnétique, noté Φs, circule sensiblement le long d'une ligne axiale à l'intérieur d'un barreau (n4), puis traverse l'entrefer (n10), puis circule sensiblement le long d'une ligne polaire dans l'induit (n3), traverse de nouveau l'entrefer (n10), revient en sens opposé le long d'une ligne axiale à l'intérieur du barreau (n4) consécutif au premier, puis traverse de nouveau l'entrefer, pour se refermer au travers d'une ligne polaire dans l'induit opposé (n'3).

Une pièce de retour de flux relie les induits (n3) et (n'3), elle peut prendre soit une forme (n2b) de liaison entre les faces coplanaires considérées dans un plan discoïdal des induits (n3) et (n'3), soit une forme (n2a) de liaison entre les faces périphériques considérées dans un plan discoïdal des induits (n3) et (n'3), soit une combinaison des deux formes précédentes. La ou les pièces de retour de flux (n2a) et/ou (n2b) peuvent être asymétriques ou irrégulières dans une première réalisation. Dans une seconde réalisation, la ou les pièces de retour de flux (n2a) et/ou (n2b) peuvent être de forme cylindrique. Dans une troisième réalisation la ou les pièces de retour de flux (n2a) et/ou (n2b) peuvent ne pas être utilisées, et être éliminées de la conception de la machine (n1). De façon préférentielle, lorsque la machine (n1) réalisée comporte au moins plus de deux phases structurelles, il est avantageux d'utiliser des pièces de retour de flux (n2a) et/ou (n2b).

Les induits (n3) et (n'3) sont décalés angulairement d'un angle noté θs. Ledit angle θs correspond à l'angle de symétrie entre le point à flux d'entrefer maximum généré par les induits (n3) et (n'3), considérés chacun comme étant alimentés par un même courant continu. De façon générale, les induits (n3) et (n'3) génèrent un flux d'entrefer qui est alternativement rentrant et sortant dans l'entrefer, l'angle θs représente le décalage angulaire entre ces figures de flux.

De façon préférentielle, si la machine (n1) est monophasée, l'angle θs est sensiblement égal à zéro ou à 180° électrique, et le déphasage temporel ΦI3 est égal à zéro ou à 180°. De façon préférentielle, si la machine (n1) est polyphasée, avec un nombre de phases électrique égal à Npe, l'angle θs est sensiblement égal en notation électrique à (180°/Npe) et l'angle temporel ΦI3 est égal à (180°/Npe).

Les (Np) barreaux inducteurs (n4) formant l'inducteur sont supportés par une pièce de maintien (n12), de forme annulaire ou cylindrique, intégrant les moyens de maintien en rotation, laquelle pièce n(12) peut assurer la liaison à l'axe de rotation. Dans une réalisation astucieuse la pièce (n12) est ferromagnétique. Dans une autre réalisation, la pièce (n12) n'est pas ferromagnétique, elle peut alors être réalisée en matériau conducteur ou isolant de l'électricité.

Les longueurs angulaires des pièces (n4) et des saillances des pièces (n3) et (n'3) (si lesdites longueurs angulaires existent, ce qui n'est pas le cas avec des pièces à pôle lisse), sont sensiblement égales de préférence à 1/3 d'un tour électrique, soit 120° électrique.

La Figure 27 décrit une réalisation (n20) astucieuse de l'inducteur selon laquelle les barreaux inducteurs (n4) sont vrillés de façon à ce que chacune de leurs extrémités (n4a) et (n4b) soit décalée angulairement.

La forme des barreaux inducteurs (n4) vue sur un plan cylindrique développé au niveau de l'entrefer, ne doit pas forcément être un rectangle, elle peut avoir toute autre forme, telle que semi-annulaire, elliptique, semi-elliptique, arrondie, circulaire, semi-circulaire. L'homme de l'art saura déterminer la meilleure forme.

La Figure 28 présente une réalisation particulière (n'1) de la machine homopolaire composée (n1), transposée au cas où les induits (n3) et (n'3) sont fixes et l'inducteur mobile, ce qui correspond aux cas d'une machine synchrone. Dans ce cas, les barreaux inducteurs (n4) qui forment l'inducteur sont scindés chacun en trois parties : (n4a) et (n4b) qui sont solidaires mécaniquement de la pièce (n12) d'une part, et d'autre part (n4c) qui sont solidaires mécaniquement des induits (n3) et (n'3). Dans le cas de la Figure 28, le rotor est considéré à titre d'exemple comme étant solidaire mécaniquement des pièces (n4a), (n4b) et (n12) .

De façon préférentielle, l'angle polaire θrs entre chaque groupe de pièces (n4a) et (n4b) d'une part et (n4c) vaut sensiblement 90° électrique dans le cas d'une machine monophasée où θs=0, et dans le cas où la machine est polyphasée θrs=90/Npe.

La Figure 29 présente le cas où plusieurs induits (n3) et (n'3) sont alignés de part et d'autre de la bobine centrale (n5). Dans le cas (n''1) correspondant à la machine (n1), où les barreaux inducteurs (n4) sont monoblocs, lesdits barreaux (n4) sont allongés axialement afin de couvrir axialement sensiblement la longueur de la machine. Les autres dispositions constructives établies pour la machine (n1) restent valables. Dans une disposition particulière avantageuse, chacun des induits (n3) et (n'3) sont déphasés angulairement l'un par rapport à l'autre d'un angle électrique égal à 180°/Npe.

Dans le cas (n'''1) correspondant à la machine (n'1), où les barreaux inducteurs (n4) sont scindés en trois morceaux, les barreaux (n4a) et (n4b) sont allongés axialement afin de couvrir axialement sensiblement la longueur de la machine. Les autres dispositions constructives établies pour la machine (n'1) restent valables. Dans une disposition particulière avantageuse, les induits (n3) et (n'3) sont déphasés angulairement d'un angle électrique égal à 180°/Npe.

Il est possible d'étendre le concept décrit à la Figure 29 pour les machines (n''1) et (n'''1) à des machines comportant un nombre quelconque supérieur à un de pièces (n3) et (n'3), lesdits nombres de pièces (n3) et (n'3) pouvant être asymétriques.

Dans une première réalisation polyphasée de la machine (n1) de l'invention, décrite à la Figure 26, le nombre de phases structurelles étant supérieur ou égal à l'unité, la machine de l'invention est constituée d'au moins autant de machines monophasées (n1), ou (n'1), ou (n''1), ou (n'''1) que de phases électriques extérieures. Une réalisation particulière correspond, dans cette disposition polyphasée, à une configuration où toutes ces machines (n1), ou (n'1), ou (n''1), ou (n'''1) sont monophasées et sont alignées le long de l'axe (n8) et régulièrement décalées d'un angle électrique égal à sensiblement un tour complet (360°), divisé par le nombre de phases Npe.

Dans une réalisation particulière, la bobine rotorique (n5) est supprimée et la pièce de retour de flux (n2a) et/ou (n2b) est remplacée par au moins un aimant de forme annulaire, magnétisé sensiblement selon la direction de l'axe (n8). Ledit aimant annulaire prend alors la place de la pièce de retour de flux (n2a) et/ou (n2b) . Dans une autre réalisation particulière, de la même disposition constructive, l'aimant annulaire est enserré entre une ou deux pièces ferromagnétiques de forme sensiblement trapézoïdale ou elliptiques, qui permettent de concentrer le flux issu de l'aimant annulaire, lesdites pièces ayant une forme de tronc de cône, avec le côté le plus large contre l'aimant.

Dans une réalisation particulière, la bobine inducteur (n5) peut être alimentée en courant alternatif, à une fréquence et une phase électrique, égale ou différente de la fréquence d'alimentation des bobines induit utilisées dans les pièces (n3) et (n'3).

Dans une réalisation particulière, la bobine inducteur (n5) peut être supprimée, toutes les dispositions constructives proposées restant valables.

Dans une réalisation particulière, la bobine inducteur (n5) peut être connectée électriquement en série avec l'une des entrées à courant continu de l'onduleur alimentant les bobines induites utilisées dans les pièces (n3) et (n'3), lequel onduleur peut être électromécanique à balais, ou électronique.

Dans une réalisation particulière, la forme extérieure des pièces (n3) et/ou (n'3) et de la pièce de retour de flux (e1) ne s'insère pas dans un cylindre, mais dans une autre forme qui peut être rectangulaire, elliptique ou autre, l'homme de l'art saura alors adapter la réalisation de la machine à cette disposition constructive particulière.

Les Figures 30, 34, 35 et 36 présentent différentes variantes de réalisation non revendiquées des pièces (n3), (n'3) munies de leurs bobines induites (n21), (n4), (n5) et (n2b), appliquées à une machine de type (n1). Lesdites variantes de réalisations peuvent être extrapolées de façon directe aux autres machines, de types (n'1), (n''1) et (n'''1) inverses ou directes.

Une alternative selon la présente invention concerne un moteur homopolaire (également dénommé moteur électrique à flux transverse) à structure dite composée double (p1) tel qu'apparaissant à la figure 31. Ledit moteur est constitué d'un empilement axial d'au moins deux induits (p3) et (p'3), séparés par au moins une bobine (p5) enroulée autour de l'axe de rotation (p8). La bobine (p5) n'est pas forcément annulaire. Les induits (p3) et (p'3) peuvent être réalisés soit selon une structure à griffe (a14a) ou (a14b) de la figure 3, soit selon une structure à pôles saillants (g1) de la figure 7, soit selon une structure à pôles lisses, ayant un nombre de phases électriques quelconque. Dans une réalisation astucieuse, les structures des pièces (p3) et (p'3) sont identiques, choisies parmi les groupes (a14a) ou (a14b) ou (g1) ou à pôles lisses. Dans une autre réalisation, elles peuvent être différentes, l'une de l'autre.

Les induits (p3) et (p'3) sont situés en face d'un inducteur, composé d'un groupe de (Nn) barreaux (p4) de forme quelconque, lesquels sont disposés le long d'un cylindre sensiblement concentrique à l'axe de rotation (p8). Les induits (p3) et (p'3) sont séparés de l'inducteur par un entrefer (p10). L'inducteur est commun à tous les induits (p3) et (p'3), il est passif c'est-à-dire composé de façon complète ou partielle de matériau ferromagnétique. L'excitation de l'inducteur peut être active dans une première réalisation grâce à la bobine (p5) fixe s'enroulant sensiblement autour de l'axe de rotation (p8). La bobine (p5) peut être mobile dans une autre réalisation. L'excitation de l'inducteur peut être passive dans une autre réalisation, étant alors réalisée avec au moins un aimant de forme par exemple annulaire s'enroulant sensiblement autour de l'axe de rotation (p8), de préférence fixe, mais ledit aimant peut aussi être mobile.

Les bobines des induits (p3) et (p'3) sont parcourues par des courants alternatifs notés I3 et I'3, qui comportent un déphasage temporel noté ΦI3.

Les induits (p3) et (p'3) comportent un même nombre de pôles, noté Np. L'inducteur comporte un nombre de barreaux inducteurs (p4) égal dans une première réalisation à Np/2. La bobine (p5) est située entre les barreaux (p4) et les pièces optionnelles de retour de flux (p2a) et/ou (p2b). La bobine (p5) est située sur la face des barreaux (p4) qui voit l'entrefer (p10).

La Figure 31 présente la structure générale de la machine homopolaire composée double (p1) de l'invention, dans une réalisation correspondant à une seule machine alternative monophasée ou à deux phases structurelles de machine homopolaire composée double, avec une structure directe de type (a20b) (voir en figure 4) à pôles saillants (g1)(voir en figure 7). Les démonstrations qui suivent peuvent être transposées à une machine inverse de type (a20a), en effectuant une symétrie de toutes les pièces autour d'une surface cylindrique centrée sur l'axe (p8) et située au milieu de l'entrefer (p10). Dans la réalisation (p1), de façon préférentielle, l'inducteur est fixe et l'induit mobile, ce qui est le cas d'une machine à courant continu à collecteur mécanique.

Le principe de fonctionnement de ladite machine (p1) vient de l'enroulement de la bobine (p5) autour de l'axe de rotation (p8). De cette manière, des pôles magnétiques équivalents sont créés par exemple tous Nord du côté (p3) et tous Sud du côté (p'3). L'inducteur se comporte de façon équivalente à un groupe d'aimants posés à l'intérieur de l'induit (p3) / (p'3). Le flux magnétique, noté Φs, circule sensiblement le long d'une ligne axiale à l'intérieur d'un barreau (p4), puis traverse l'entrefer (p10), puis circule sensiblement le long d'une ligne polaire dans l'induit (p3), traverse de nouveau l'entrefer (p10), revient en sens opposé le long d'une ligne axiale à l'intérieur du barreau (p4) consécutif au premier, puis traverse de nouveau l'entrefer, pour se refermer au travers d'une ligne polaire dans l'induit opposé (p'3).

Une pièce de retour de flux relie les induits (p3) et (p'3), elle peut prendre soit une forme (p2b) de liaison entre les faces coplanaires considérées dans un plan discoïdal des induits (p3) et (p'3), soit une forme (p2a) de liaison entre les faces périphériques considérées dans un plan discoïdal des induits (p3) et (p'3), soit une combinaison des deux formes précédentes. La ou les pièces de retour de flux (p2a) et/ou (p2b) peuvent être asymétriques ou irrégulières dans une première réalisation. Dans une seconde réalisation, la ou les pièces de retour de flux (p2a) et/ou (p2b) peuvent être de forme cylindrique. Dans une troisième réalisation la ou les pièces de retour de flux (p2a) et/ou (p2b) peuvent ne pas être utilisées, et être éliminées de la conception de la machine (p1). De façon préférentielle, lorsque la machine (p1) réalisée comporte au moins plus de deux phases structurelles, il est avantageux d'utiliser des pièces de retour de flux (p2a) et/ou (p2b).

Les induits (p3) et (p'3) sont décalés angulairement d'un angle noté θs. Ledit angle θs correspond à l'angle de symétrie entre le point à flux d'entrefer maximum généré par les induits (p3) et (p'3), considérés chacun comme étant alimentés par un même courant continu. De façon générale, les induits (p3) et (p'3) génèrent un flux d'entrefer qui est alternativement rentrant et sortant dans l'entrefer, l'angle θs représente le décalage angulaire entre ces figures de flux.

De façon préférentielle, si la machine (p1) est monophasée, l'angle θs est sensiblement égal à zéro ou à 180° électrique, et le déphasage temporel ΦI3 est égal à zéro ou à 180°. De façon préférentielle, si la machine (p1) est polyphasée, avec un nombre de phases électrique égal à Npe, l'angle θs est sensiblement égal en notation électrique à (180°/Npe) et l'angle temporel ΦI3 est égal à (180°/Npe).

Les barreaux inducteurs (p4) formant l'inducteur sont supportés par une pièce de maintien (p12), de forme annulaire ou cylindrique, intégrant les moyens de maintien en rotation, laquelle pièce n(12) peut assurer la liaison à l'axe de rotation. Dans une réalisation astucieuse la pièce (p12) est ferromagnétique. Dans une autre réalisation, la pièce (p12) n'est pas ferromagnétique, elle peut alors être réalisée en matériau conducteur ou isolant de l'électricité.

Les longueurs angulaires des pièces (p4) et des saillances des pièces (p3) et (p'3) (si lesdites longueurs angulaires existent, ce qui n'est pas le cas avec des pièces à pôles lisses), sont sensiblement égales de préférence à 1/3 d'un tour électrique, soit 120° électrique.

La Figure 32 décrit une réalisation astucieuse (p20) de l'inducteur (p'4), dans laquelle les barreaux inducteurs (p4) sont vrillés de façon à ce que chacune de leurs extrémités (p4a) et (p4b) soit décalée angulairement.

La forme des barreaux inducteurs (p4) vue sur un plan cylindrique développé au niveau de l'entrefer, ne doit pas forcément être un rectangle, elle peut avoir toute autre forme, telle que semi-annulaire, elliptique, semi-elliptique, arrondie, circulaire, semi-circulaire. L'homme de l'art saura déterminer la meilleure forme.

La Figure 33 présente le cas où plusieurs induits (p3) et (p'3) sont alignés de part et d'autre de la bobine centrale (p5). Dans le cas (p''1) correspondant à la machine (p1), où les barreaux inducteurs (p4) sont monoblocs, lesdits barreaux (p4) sont allongés axialement afin de couvrir axialement sensiblement la longueur de la machine. Les autres dispositions constructives établies pour la machine (p1) restent valables. Dans une disposition particulière avantageuse, chacun des induits (p3) et (p'3) sont déphasés angulairement l'un par rapport à l'autre d'un angle électrique égal à 180°/Npe.

Dans le cas (p'''1) correspondant à la machine (p'1), où les barreaux inducteurs (p4) sont scindés en trois morceaux, les barreaux (p4a) et (p4b) sont allongés axialement afin de couvrir axialement sensiblement la longueur de la machine. Les autres dispositions constructives établies pour la machine (p'1) restent valables. Dans une disposition particulière avantageuse, les induits (p3) et (p'3) sont déphasés angulairement d'un angle électrique égal à 180°/Npe.

Il est possible d'étendre le concept décrit à la Figure 33 pour les machines (p''1) et (p'''1) à des machine comportant un nombre quelconque supérieur à un de pièces (p3) et (p'3), lesdits nombres de pièces (p3) et (p'3) pouvant être asymétriques.

Dans une première réalisation polyphasée de la machine (p1) de l'invention, décrite à la Figure 31, le nombre de phases structurelles étant supérieur ou égal à l'unité, la machine de l'invention est constituée d'au moins autant de machines monophasées (p1), ou (p'1), ou (p''1), ou (p'''1) que de phases électriques extérieures. Une réalisation particulière correspond, dans cette disposition polyphasée, à une configuration où toutes ces machines (p1), ou (p'1), ou (p''1), ou (p'''1) sont monophasées et sont alignées le long de l'axe (p8) et régulièrement décalées d'un angle électrique égal à sensiblement un tour complet (360°), divisé par le nombre de phases Npe.

Dans une réalisation particulière, la bobine rotorique (p5) est supprimée et la pièce de retour de flux (p2a) et/ou (p2b) est remplacée par au moins un aimant de forme annulaire, magnétisé sensiblement selon la direction de l'axe (p8). Ledit aimant annulaire prend alors la place de la pièce de retour de flux (p2a) et/ou (p2b) . Dans une autre réalisation particulière, de la même disposition constructive, l'aimant annulaire est enserré entre une ou deux pièces ferromagnétiques de forme sensiblement trapézoïdale ou elliptiques, qui permettent de concentrer le flux issu de l'aimant annulaire, lesdites pièces ayant une forme de tronc de cône, avec le côté le plus large contre l'aimant.

Dans une réalisation particulière, la bobine inducteur (p5) peut être alimentée en courant alternatif, à une fréquence et une phase électrique, égale ou différente de la fréquence d'alimentation des bobines induit utilisées dans les pièces (p3) et (p'3).

Dans une réalisation particulière, la bobine inducteur (p5) peut être supprimée, toutes les dispositions constructives proposées restant valables.

Dans une réalisation particulière, la bobine inducteur (p5) peut être connectée électriquement en série avec l'une des entrées à courant continu de l'onduleur alimentant les bobines induit utilisées dans les pièces (p3) et (p'3), lequel onduleur peut être électromécanique à balais, ou électronique.

Dans une réalisation particulière, la forme extérieure des pièces (p3) et/ou (p'3) et de la pièce de retour de flux (p2a) ne s'insère pas dans un cylindre, mais dans une autre forme qui peut être rectangulaire, elliptique ou autre, l'homme de l'art saura alors adapter la réalisation de la machine à cette disposition constructive particulière.

La présente invention est limitée aux revendications.

## Revendications

1. Machine électrique tournante comportant un nombre Npe de phases électriques constituée :
- d'une juxtaposition, selon l'axe de rotation (n8) de la machine électrique tournante, d'au moins une paire d'induits (n3, n'3) ayant un nombre Np de pôles, placés de part et d'autre d'au moins une bobine inductrice (n5), enroulée autour de l'axe de rotation (n8) de la machine électrique tournante, les induits adjacents étant décalés angulairement d'un angle électrique θs quelconque, de préférence compris entre 0° et 90°/2Np ;
- d'au moins un inducteur (n4, n5, n12) constitué au moins partiellement de matériau ferromagnétique, séparé des induit (n3, n'3) par un entrefer (n10) ;
et dans laquelle
- l'un des induits et de l'inducteur est mobile en rotation et constitue au moins un rotor et
- l'autre des induits et de l'inducteur est fixe et constitue au moins un stator ;
**caractérisée en ce que** l'inducteur comporte le même nombre Np de barreaux inducteurs (n4) orientés dans une direction axiale, couvrant sensiblement la longueur axiale de la machine , les barreaux inducteur (n4) étant vrillés et et- rapportés à un support 20 (n12) les reliant , leurs extrémités axiales (n4a, n4b) étant angulairement décalées.

2. Machine électrique tournante selon la revendication 1, **caractérisée en ce que** la bobine inductrice (n5) traverse radialement l'entrefer de part et d'autre de chaque barreau de l'inducteur, entrant d'un côté et ressortant de l'autre côté de manière à passer respectivement au-dessus et au-dessous de deux barreaux adjacents de l'inducteur, dans une direction radiale.

3. Machine électrique tournante selon l'une des revendications 1 et 2, **caractérisée en ce que** la bobine inductrice (n5) est située en totalité entre les induits de la paire d'induits, et ne franchit pas l'entrefer.

4. Machine électrique tournante selon l'une des revendications 1 à 3, **caractérisée en ce que** les barreaux inducteurs (n4) sont scindés en plusieurs portions positionnées respectivement en regard des induits et de la zone comportant la ou les bobines inductrices, la ou les portions en regard de la zone comportant la ou les bobines inductrices étant solidaire des induits.

5. Machine électrique tournante selon la revendication précédente, **caractérisée en ce que** les portions des barreaux inducteurs (n4) interagissant avec l'induit sont décalées angulairement relativement audit induit d'une valeur quelconque, avec une valeur préférentielle de 90°/2Np, prise entre le centre d'un pôle induit et le centre du barreau inducteur solidaire dudit induit.

6. Machine électrique tournante selon la revendication précédente, **caractérisée en ce que** le support (n12) des barreaux inducteurs est réalisé en matériau ferromagnétique.

7. Machine électrique tournante selon l'une des revendications précédentes, **caractérisée en ce que** chaque induit des paires d'induits comporte une pièce polaire de retour de flux (n2a, n2b) reliant leurs pôles, et reliant des parois radiales des induits en regard.

8. Machine électrique tournante selon l'une des revendications précédentes, **caractérisée en ce que** chaque induit des paires d'induits comporte une pièce polaire de retour de flux (n2a, n2b) reliant leurs pôles, et entourant les parois non radiales des induits distales de l'inducteur.

9. Machine électrique tournante selon l'une des revendications 7 et 8, **caractérisée en ce que** la pièce polaire de retour de flux (n2a, n2b) est d'allure cylindrique.

10. Machine électrique tournante selon l'une des revendications précédentes, **caractérisée en ce que** les induits des paires d'induits séparés par une bobine sont chacun constitués de plusieurs induits élémentaires.

11. Machine électrique tournante selon la revendication 1, **caractérisée en ce que** l'inducteur comporte Np barreaux inducteurs (n4) orientés dans une direction d'allure axiale, couvrant sensiblement la longueur axiale de la machine et rapportés à un support les reliant à l'axe de rotation de la machine électrique tournante, et la bobine inductrice est située en totalité entre les induits de la paire d'induits, et ne franchit pas l'entrefer.

12. Machine électrique tournante selon l'une des revendications précédentes, **caractérisée en ce que** la bobine inductrice (n5) est vrillée, annulaire ou de forme ondulée dans un plan transversal.

13. Machine électrique tournante selon l'une des revendications précédentes, **caractérisée en ce que** les bobines inductrices (n5) des différentes phases sont couplées en étoile, triangle ou zig-zag.

14. Machine électrique tournante selon l'une des revendications précédentes, **caractérisée en ce qu'**elle comporte au moins un stator ou groupe d'une pluralité de stators associé à au moins un rotor ou groupe d'une pluralité de rotors.

15. Machine électrique tournante selon l'une des revendications précédentes, **caractérisée en ce qu'**un induit est commun à plusieurs inducteurs ou un inducteur est commun à plusieurs induits.

16. Machine électrique tournante selon la revendication précédente, **caractérisée en ce qu'**une pièce de couplage en matériau ferromagnétique relie les plusieurs inducteurs ou les plusieurs induits.

17. Machine électrique tournante selon l'une des revendications précédentes, **caractérisée en ce que** les des surfaces libres des pôles bordant l'entrefer sont inclinées dans une direction axiale, de manière linéaire ou incurvée, ou ces surfaces libres sont asymétriques dans une direction transversale par rapport à un plan axial médian du pôle contenant l'axe de rotation de la machine électrique tournante.

18. Machine électrique tournante selon l'une des revendications précédentes, **caractérisée en ce que** les pôles des induits (g2) sont constitués de dents comportant une jambe d'allure radiale reliée via un pied (g3) à la pièce polaire de retour de flux et un bec (g5) d'allure axiale, lesdites dents de chaque induit étant séparées par une distance angulaire permettant l'emboîtement tête-bêche d'un autre induit à structure dentée identique en vue de constituer la paire d'induits autour d'une bobine inductrice, **caractérisée en ce que** le bec comporte au moins un décrochement en marche d'escalier (g4).

19. Machine électrique tournante selon la revendication précédente, **caractérisée en ce que** le décrochement est situé à une distance radiale de l'axe de rotation de la machine électrique tournante sensiblement égale à la distance radiale d'une paroi de la pièce polaire de retour de flux s'étendant dans une direction axiale dont dépassent les dents.

20. Machine électrique tournante selon la revendication précédente, **caractérisée en ce que** le décrochement comporte une paroi située dans un plan transversal médian de la paire d'induits.

21. Machine électrique tournante selon l'une des revendications 18 à 20 **caractérisée en ce que** les dents s'évasent via des oreilles latérales (g13) au niveau de leur liaison à la pièce polaire de retour de flux.

22. Machine électrique tournante selon l'une des revendications 18 à 21, **caractérisée en ce que** les dents sont distinctes de la pièce polaire de retour de flux.

23. Machine électrique tournante selon la revendication précédente, **caractérisée en ce que** la pièce polaire de retour de flux présente des évidements pour la fixation des dents.

24. Machine électrique tournante selon l'une des revendications 18 à 23, **caractérisée en ce que** la bobine inductrice est enroulée de façon vrillée autour des pieds des dents des induits de la paire d'induits entourant la bobine inductrice.

25. Machine électrique tournante selon l'une des revendications 18 à 24, **caractérisée en ce que** les sections des jambes des dents (h23) présentent, en au moins une surface cylindrique coaxiale à l'axe de rotation, des parois latérales parallèles entre elles, d'un seul tenant ou en escalier.

26. Machine électrique tournante selon l'une des revendications 18 à 24, **caractérisée en ce que** les sections des jambes des dents (h23) présentent, en au moins un plan de section perpendiculaire à la dimension radiale des jambes, des parois latérales planes inclinées, notamment d'un seul tenant ou en escalier, ou des parois latérales courbes.

27. Machine électrique tournante selon l'une des revendications 18 à 26, **caractérisée en ce que** les becs des dents sont distincts et rapportés sur les jambes.

28. Machine électrique tournante polyphasée, **caractérisée en ce qu'**elle est constituée d'une juxtaposition coaxiale de machines électriques tournantes selon les revendications précédentes, régulièrement décalées d'un angle électrique de 360°/2Np.

## Patentansprüche

1. Drehende elektrische Maschine, aufweisend eine Anzahl Npe von elektrischen Phasen, bestehend aus:
- einer Aneinanderreihung, gemäß der Drehachse (n8) der drehenden elektrischen Maschine, von mindestens einem Ankerpaar (n3, n'3) mit einer Anzahl Np von Polen, die beiderseits von mindestens einer Induktionsspule (n5) angeordnet sind, die um die Drehachse (n8) der drehenden elektrischen Maschine gewickelt ist, wobei die benachbarten Anker in einem beliebigen elektrischen Winkel θs vorzugsweise zwischen 0° und 90°/2Np winklig versetzt sind;
- mindestens einem Induktor (n4, n5, n12), der mindestens teilweise aus ferromagnetischem Material besteht, getrennt von den Ankern (n3, n'3) durch einen Spalt (n10) ;
und wobei
- einer von den Ankern und von dem Induktor rotatorisch beweglich ist und mindestens einen Rotor bildet und
- der andere von den Ankern und von dem Induktor fest ist und mindestens einen Stator bildet;
**dadurch gekennzeichnet, dass** der Induktor dieselbe Anzahl Np von Induktionsstäben (n4) aufweist, die in einer axialen Richtung ausgerichtet sind, die etwa die axiale Länge der Maschine bedecken, wobei die Induktionsstäbe (n4) verdreht und auf einem Träger (n12) angebracht sind, der sie verbindet, wobei ihre axialen Enden (n4a, n4b) winklig versetzt sind.

2. Drehende elektrische Maschine nach Anspruch 1, **dadurch gekennzeichnet, dass** die Induktionsspule (n5) den Spalt von einer Seite zur anderes jedes Stabs des Induktors radial durchquert, auf der einen Seite eintretend und auf der anderen Seite austretend, mit einem Verlauf jeweils über und unter zwei benachbarten Stäben des Induktors, in einer radialen Richtung.

3. Drehende elektrische Maschine nach einem der Ansprüche 1 und 2, **dadurch gekennzeichnet, dass** sich die Induktionsspule (n5) insgesamt zwischen den Ankern des Ankerpaars befindet und den Spalt nicht überwindet.

4. Drehende elektrische Maschine nach einem der Ansprüche 1 bis 3, **dadurch gekennzeichnet, dass** die Induktionsstäbe (n4) in mehrere Abschnitte geteilt sind, die jeweils den Ankern und der Zone, die die Induktionsspule(n) aufweist, zugewandt positioniert sind, wobei der oder die Abschnitte, die der Zone zugewandt ist/sind, die die Induktionsspule(n) aufweist, mit den Ankern fest verbunden sind.

5. Drehende elektrische Maschine nach vorangehendem Anspruch, **dadurch gekennzeichnet, dass** die Abschnitte der Induktionsstäbe (n4), die mit dem Anker interagieren, relativ zum Anker in einem beliebigen Wert mit einem bevorzugten Wert von 90°/2Np winklig versetzt sind, ermittelt zwischen dem Zentrum eines Ankerpols und dem Zentrum des Induktionsstabs, der mit dem Anker fest verbunden ist.

6. Drehende elektrische Maschine nach vorangehendem Anspruch, **dadurch gekennzeichnet, dass** der Träger (n12) der Induktionsstäbe aus ferromagnetischem Material hergestellt ist.

7. Drehende elektrische Maschine nach einem der vorangehenden Ansprüche, **dadurch gekennzeichnet, dass** jeder Anker der Ankerpaare ein polares Flussrückführungsteil (n2a, n2b) aufweist, welches ihre Pole verbindet und radiale Wände der zugewandten Anker verbindet.

8. Drehende elektrische Maschine nach einem der vorangehenden Ansprüche, **dadurch gekennzeichnet, dass** jeder Anker der Ankerpaare ein polares Flussrückführungsteil (n2a, n2b) aufweist, welches ihre Pole verbindet und die nicht radialen Wände der distalen Anker des Induktors umgibt.

9. Drehende elektrische Maschine nach einem der Ansprüche 7 und 8, **dadurch gekennzeichnet, dass** das polare Flussrückführungsteil (n2a, n2b) zylindrisch ist.

10. Drehende elektrische Maschine nach einem der vorangehenden Ansprüche, **dadurch gekennzeichnet, dass** die durch eine Spule getrennten Anker der Ankerpaare jeweils aus mehreren elementaren Ankern bestehen.

11. Drehende elektrische Maschine nach Anspruch 1, **dadurch gekennzeichnet, dass** der Induktor Np Induktionsstäbe (n4) aufweist, die in einer axialen Richtung ausgerichtet sind, die etwa die axiale Länge der Maschine bedecken und auf einem Träger angebracht sind, der sie mit der Rotationsachse der drehenden elektrischen Maschine verbindet, und sich die Induktionsspule insgesamt zwischen den Ankern des Ankerpaars befindet und den Spalt nicht überwindet.

12. Drehende elektrische Maschine nach einem der vorangehenden Ansprüche, **dadurch gekennzeichnet, dass** die Induktionsspule (n5) in einer transversalen Ebene verdreht, ringförmig oder wellenförmig ist.

13. Drehende elektrische Maschine nach einem der vorangehenden Ansprüche, **dadurch gekennzeichnet, dass** die Induktionsspulen (n5) der verschiedenen Phasen sternförmig, dreieckig oder im Zickzack gekoppelt sind.

14. Drehende elektrische Maschine nach einem der vorangehenden Ansprüche, **dadurch gekennzeichnet, dass** sie mindestens einen Stator oder Gruppe einer Vielzahl von Statoren aufweist, der/die mindestens einem Rotor oder Gruppe einer Vielzahl von Rotoren zugeordnet ist.

15. Drehende elektrische Maschine nach einem der vorangehenden Ansprüche, **dadurch gekennzeichnet, dass** ein Anker mehreren Induktoren gemeinsam ist oder ein Induktor mehreren Ankern gemeinsam ist.

16. Drehende elektrische Maschine nach vorangehendem Anspruch, **dadurch gekennzeichnet, dass** ein Verbindungsteil aus ferromagnetischem Material die mehreren Induktoren oder die mehreren Anker verbindet.

17. Drehende elektrische Maschine nach einem der vorangehenden Ansprüche, **dadurch gekennzeichnet, dass** die freien Flächen der Pole neben dem Spalt in einer axialen Richtung linear oder gekrümmt geneigt sind, oder diese freien Flächen in einer transversalen Richtung in Bezug auf eine mittlere axiale Ebene des Pols, der die Drehachse der drehenden elektrischen Maschine enthält, asymmetrisch sind.

18. Drehende elektrische Maschine nach einem der vorangehenden Ansprüche, **dadurch gekennzeichnet, dass** die Polen der Anker (g2) aus Zähnen bestehen, die ein radiales Bein aufweisen, das über einen Fuß (g3) mit dem polaren Flussrückführungsteil und einer axialen Spitze (g5) verbunden ist, wobei die Zähne jedes Ankers durch einem Winkelabstand getrennt sind, der das entgegengesetzte Einrasten eines anderen Ankers mit identischer gezahnter Struktur gestattet, um das Ankerpaar um eine Induktionsspule zu bilden, **dadurch gekennzeichnet, dass** die Spitze mindestens einen treppenstufenförmigen Absatz (g4) aufweist.

19. Drehende elektrische Maschine nach vorangehendem Anspruch, **dadurch gekennzeichnet, dass** sich der Absatz in einem radialen Abstand von der Drehachse der drehenden elektrischen Maschine befindet, der etwa gleich dem radialen Abstand von einer Wand des polaren Flussrückführungsteils ist, die sich in einer axialen Richtung erstreckt, über die die Zähne hinausragen.

20. Drehende elektrische Maschine nach vorangehendem Anspruch, **dadurch gekennzeichnet, dass** der Absatz eine Wand aufweist, die sich in einer mittleren transversalen Ebene des Ankerpaars befindet.

21. Drehende elektrische Maschine nach einem der Ansprüche 18 bis 20, **dadurch gekennzeichnet, dass** sich die Zähne über seitliche Ohren (g13) im Bereich ihrer Verbindung mit dem polaren Flussrückführungsteil verbreitern.

22. Drehende elektrische Maschine nach einem der Ansprüche 18 bis 21, **dadurch gekennzeichnet, dass** die Zähne vom polaren Flussrückführungsteil verschieden sind.

23. Drehende elektrische Maschine nach vorangehendem Anspruch, **dadurch gekennzeichnet, dass** das polare Flussrückführungsteil Aussparungen für die Befestigung der Zähne aufweist.

24. Drehende elektrische Maschine nach einem der Ansprüche 18 bis 23, **dadurch gekennzeichnet, dass** die Induktionsspule verdreht um Füße der Zähne der Anker des Ankerpaars gewickelt ist, die die Induktionsspule umgeben.

25. Drehende elektrische Maschine nach einem der Ansprüche 18 bis 24, **dadurch gekennzeichnet, dass** die Querschnitte der Beine der Zähne (h23) an mindestens einer zylindrischen, zur Drehachse koaxialen Fläche zueinander parallele zusammenhängende oder treppenförmige Seitenwände aufweisen.

26. Drehende elektrische Maschine nach einem der Ansprüche 18 bis 24, **dadurch gekennzeichnet, dass** die Querschnitte der Beine der Zähne (h23) an mindestens einer Querschnittsebene, die senkrecht zur radialen Abmessung der Beine ist, geneigte ebene Seitenwände, insbesondere zusammenhängende oder treppenförmige, oder gekrümmte Seitenwände aufweisen.

27. Drehende elektrische Maschine nach einem der Ansprüche 18 bis 26, **dadurch gekennzeichnet, dass** die Spitzen der Zähne verschieden und auf den Beinen angebracht sind.

28. Mehrphasige drehende elektrische Maschine, **dadurch gekennzeichnet, dass** sie aus einer koaxialen Aneinanderreihung drehender elektrischer Maschinen nach einem der vorangehenden Ansprüche besteht, die in einem elektrischen Winkel von 360°/2Np gleichmäßig versetzt sind.

## Claims

1. A rotating electric machine including a number Npe of electric phases consisting of:
- a juxtaposition, along the axis of rotation (n8) of the rotating electric machine, of at least one pair of armatures (n3, n'3) having a number Np of poles, placed on either side of at least one inductor coil (n5), wound around the axis of rotation (n8) of the rotating electric machine, the adjacent armatures being angularly offset by any electrical angle θs, preferably comprised between 0° and 90°/2Np;
- at least one inductor (n4, n5, n12) made at least partially of ferromagnetic material, separated from the armatures (n3, n'3) by an air gap (n10);
and wherein
- one of the armatures and of the inductor is movable in rotation and constitutes at least one rotor and
- the other of the armatures and of the inductor is stationary and constitutes at least one stator;
**characterised in that** the inductor includes the same number Np of inductor bars (n4) oriented in an axial direction, substantially covering the axial length of the machine, the inductor bars (n4) being twisted and attached to a support (n12) connecting them, their axial ends (n4a, n4b) being angularly offset.

2. The rotating electric machine according to claim 1, **characterised in that** the inductor coil (n5) radially passes through the air gap on either side of each bar of the inductor, entering on one side and emerging from the other side so as to pass respectively above and below two adjacent bars of the inductor, in a radial direction.

3. The rotating electric machine according to one of claims 1 and 2, **characterised in that** the inductor coil (n5) is located entirely between the armatures of the pair of armatures, and does not cross the air gap.

4. The rotating electric machine according to one of claims 1 to 3, **characterised in that** the inductor bars (n4) are split into several portions positioned respectively opposite the armatures and the area including the inductor coil(s), the portion(s) facing the area including the inductor coil(s) being integral with the armatures.

5. The rotating electric machine according to the preceding claim, **characterised in that** the portions of the inductor bars (n4) interacting with the armature are angularly offset relative to said armature by any value, with a preferential value of 90°/2Np, taken between the centre of an armature pole and the centre of the inductor bar integral with said armature.

6. The rotating electric machine according to the preceding claim, **characterised in that** the support (n12) of the inductor bars is made of ferromagnetic material.

7. The rotating electric machine according to one of the preceding claims, **characterised in that** each armature of the pairs of armatures includes a flux return pole part (n2a, n2b) connecting their poles, and connecting the radial walls of the opposite armatures.

8. The rotating electric machine according to one of the preceding claims, **characterised in that** each armature of the armature pairs includes a flux return pole part (n2a, n2b) connecting their poles, and surrounding the non-radial walls of the distal armatures of the inductor.

9. The rotating electric machine according to one of claims 7 and 8, **characterised in that** the flux return pole part (n2a, n2b) is cylindrical in shape.

10. The rotating electric machine according to one of the preceding claims, **characterised in that** the armatures of the pairs of armatures separated by a coil each consist of several elementary armatures.

11. The rotating electric machine according to claim 1, **characterised in that** the inductor includes Np inductor bars (n4) oriented in an axial direction, substantially covering the axial length of the machine and attached to a support connecting them to the axis of rotation of the rotating electric machine, and the inductor coil is located entirely between the armatures of the pair of armatures, and does not cross the air gap.

12. The rotating electric machine according to one of the preceding claims, **characterised in that** the inductor coil (n5) is twisted, annular or of wavy shape in a transverse plane.

13. The rotating electric machine according to one of the preceding claims, **characterised in that** the inductor coils (n5) of the different phases are star, delta or zig-zag coupled.

14. The rotating electric machine according to one of the preceding claims, **characterised in that** it includes at least one stator or group of a plurality of stators associated with at least one rotor or group of a plurality of rotors.

15. The rotating electric machine according to one of the preceding claims, **characterised in that** an armature is common to several inductors or an inductor is common to several armatures.

16. The rotating electric machine according to the preceding claim, **characterised in that** a coupling part made of ferromagnetic material connects the several inductors or the several armatures.

17. The rotating electric machine according to one of the preceding claims, **characterised in that** the free surfaces of the poles bordering the air gap are inclined in an axial direction, in a linear or curved manner, or these free surfaces are asymmetrical in a transverse direction relative to a median axial plane of the pole containing the axis of rotation of the rotating electric machine.

18. The rotating electric machine according to one of the preceding claims, **characterised in that** the poles of the armatures (g2) consist of teeth including a radial-shaped leg connected via a foot (g3) to the flux return pole part and a nose (g5) of axial shape, said teeth of each armature being separated by an angular distance allowing the head-to-tail fitting of another armature having an identical toothed structure in order to constitute the pair of armatures around an inductor coil, **characterised in that** the nose includes at least one step indentation (g4).

19. The rotating electric machine according to the preceding claim, **characterised in that** the indentation is located at a radial distance from the axis of rotation of the rotating electric machine substantially equal to the radial distance from a wall of the flux return pole part extending in an axial direction from which the teeth protrude.

20. The rotating electric machine according to the preceding claim, **characterised in that** the indentation includes a wall located in a median transverse plane of the pair of armatures.

21. The rotating electric machine according to one of claims 18 to 20 **characterised in that** the teeth widen out via lateral lugs (g13) at their connection to the flux return pole part.

22. The rotating electric machine according to one of claims 18 to 21, **characterised in that** the teeth are distinct from the flux return pole part.

23. The rotating electric machine according to the preceding claim, **characterised in that** the flux return pole part has recesses for fixing the teeth.

24. The rotating electric machine according to one of claims 18 to 23, **characterised in that** the inductor coil is wound in a twisted manner around the feet of the teeth of the armatures of the pair of armatures surrounding the inductor coil.

25. The rotating electric machine according to one of claims 18 to 24, **characterised in that** the sections of the legs of the teeth (h23) have, in at least one cylindrical surface coaxial with the axis of rotation, side walls parallel to each other, which are made in one piece or stepped.

26. The rotating electric machine according to one of claims 18 to 24, **characterised in that** the sections of the legs of the teeth (h23) have, in at least one plane of section perpendicular to the radial dimension of the legs, inclined plane side walls, which are in particular made in one piece or stepped, or curved side walls.

27. The rotating electric machine according to one of claims 18 to 26, **characterised in that** the noses of the teeth are distinct and attached to the legs.

28. A multiphase rotating electric machine, **characterised in that** it consists of a coaxial juxtaposition of rotating electric machines according to the preceding claims, regularly offset by an electric angle of 360°/2Np.
